# FASCICULE DE BREVET EUROPEEN

(11) **EP 2 543 165 B1**
(45) Date de publication et mention de la délivrance du brevet: **09.01.2019**
(21) Numéro de dépôt: 11712963.5
(22) Date de dépôt: 03.03.2011
(51) Int. Cl.: H04L 12/28, H04L 12/46

(54) **PILOTAGE D'UN DISPOSITIF D'UN RESEAU DISTANT A PARTIR D'UN RESEAU LOCAL**
STEUERUNG EINER VORRICHTUNG DER EIN REMOTE-NETZWERK GEHORT VON EINEM LOKALEN NETZWERK
CONTROLLING OF A DEVICE OF A REMOTE NETWORK FROM A LOCAL NETWORK

(30) Priorité: 03.03.2010 FR 1051521
(43) Date de publication de la demande: 09.01.2013
(73) Titulaire: Orange, 75015 Paris (FR)
(72) Inventeur: MURPHY, Vincent, F-59110 La Madeleine (FR); AGRO, Roberto, F-92120 Montrouge (FR)
(86) Numéro de dépôt international: PCT/FR2011/050450
(87) Numéro de publication internationale: WO 2011/107717

(56) Documents cités:
- EP-A2- 2 124 389
- GB-A- 2 445 791
- HILLEN B A G ET AL: "Remote Management of Non-TR-069 UPnP End-User Devices in a Private Network", CONSUMER COMMUNICATIONS AND NETWORKING CONFERENCE, 2009. CCNC 2009. 6TH IEEE, IEEE, PISCATAWAY, NJ, USA, 10 janvier 2009 (2009-01-10), pages 1-2, XP031425716, ISBN: 978-1-4244-2308-8

## Description

L'invention se rapporte de manière générale aux techniques de télécommunication, et plus particulièrement au pilotage d'un dispositif d'un réseau distant à partir d'un réseau local.

Différentes technologies connues permettent d'établir une connexion d'un réseau à un autre, dans un but par exemple de commande d'une entité d'un réseau distant à partir d'un réseau local. Par exemple, les tunnels sécurisés VPN (Virtual Private Network). Une autre solution couramment utilisée consiste à faire appel à une architecture IMS (IP Multimedia Subsystem).

Ces solutions à base de tunnel VPN ou architecture IMS existantes sont relativement lourdes et complexes à mettre en oeuvre. En outre, avec les solutions à base de tunnel VPN, des problèmes de conflit d'adresses se posent. Les architectures IMS ne sont pas forcément mise à disposition librement des utilisateurs du grand public.

Or, dans le domaine grand public, le standard UPNP / DLNA s'impose comme un standard pour le partage, la diffusion et le contrôle des contenus numériques. Aujourd'hui, différents équipements conformes au standard UPNP (Universal Plug and Play) se répandent dans les foyers, et en particulier dans le domaine du multimédia avec les Media Servers (nommés par exemple TwonkyMedia, Windows Media Player 11, ...), les Media Renderers (STB, DMA audio, IP-Radio, ...), et les Media Players (consoles de jeux, des cadres photo numériques, ...).

Cependant les équipements d'un réseau UPnP ne sont pas conçus pour communiquer avec un équipement d'un autre réseau UPnP. En effet, il n'existe pas dans le standard UPnP de solution de pilotage à distance de cette entité. En effet, le mécanisme de découverte d'entités UPnP utilise un envoi de commande en mode "multicast" (multidiffusion) qui ne permet que de découvrir des entités présentes dans un réseau local, et non pas celles présentes dans un réseau distant.

Il apparaît ainsi un besoin pour une solution simple de pilotage, à partir d'un réseau local, des entités d'un réseau distant, solution qui soit adaptée au pilotage à distance d'une entité sous forme de dispositif UPnP.

Un des buts de l'invention est de remédier à des problèmes, inconvénients ou insuffisances de l'état de la technique et/ou d'y apporter des améliorations.

L'invention concerne, selon un premier aspect, un procédé de pilotage à partir d'un premier réseau, dit réseau local, d'au moins un dispositif UPnP d'un réseau distant, le procédé étant mis en oeuvre par un premier module relais du premier réseau, configuré pour communiquer avec au moins un deuxième module relais d'un réseau distant, le procédé comprenant:
- une étape d'obtention, via un dit deuxième module relais, d'au moins un identifiant d'un dispositif UPnP détecté dans un dit réseau distant par un point de contrôle UPnP associé audit deuxième module relais ;
- une étape d'enregistrement d'au moins un identifiant reçu en association avec des données d'identification du deuxième module relais ayant fourni ledit au moins un identifiant;
- une étape de pilotage d'un dispositif UPnP dudit réseau distant par l'intermédiaire du point de contrôle associé au deuxième module relais, identifié par les données d'identification enregistrées en association avec un identifiant de ce dispositif UPnP.

L'invention prévoit ainsi un mécanisme de communication entre un réseau local et un réseau distant, reposant sur l'utilisation de modules relais, localisés respectivement dans le réseau local et dans le réseau distant, qui sont conçus chacun pour communiquer entre eux et pour fournir une liste d'identifiants de dispositifs susceptibles d'être pilotés par leur intermédiaire.

En particulier, la mémorisation, par un module relais local, d'un de ces identifiants en association avec des données d'identification du module relais susceptible de piloter le dispositif identifié par cet identifiant, permet un envoi ultérieur d'une requête à ce dispositif par l'intermédiaire du module relais concerné et du point de contrôle associé à ce module relais concerné.

Cette méthode de pilotage à distance un dispositif UPnP par l'intermédiaire d'un point de contrôle présent dans le même réseau que ce dispositif UPnP est applicable à tout dispositif UPnP de ce réseau ayant été détecté par le point de contrôle UPnP. En conséquence, un module relais unique, associé à un point de contrôle suffit dans chaque réseau pour rendre possible le pilotage à distance de tous les dispositifs UPnP du réseau.

En outre, non seulement les identifiants mais également les informations décrivant les dispositifs UPnP du réseau distant qui sont collectées pendant la phase de découverte mise en oeuvre selon le standard UPnP / DLNA par le point de contrôle, sont utilisables directement par le module relais du réseau local pour piloter à distance ces dispositifs UPnP. Aucune phase de découverte complémentaire n'est à mettre en oeuvre pour disposer de ces informations.

Selon un mode de réalisation, le procédé selon l'invention comprend en outre :
- une étape d'envoi d'une requête à un deuxième dispositif UPnP du réseau distant par l'intermédiaire du deuxième module relais identifié par les données d'identification enregistrées en association avec un identifiant dudit dispositif UPnP;
- une étape de réception, par l'intermédiaire dudit deuxième module relais, d'une réponse à ladite requête en provenance du deuxième dispositif UPnP.

Le module relais local communique avec les entités UPnP du réseau distant par l'intermédiaire du module relais distant aussi bien pour l'envoi de requêtes que pour la réception des réponses à ces requêtes. Le module relais distant, coopérant avec le module relais local, constitue une entité mandataire (ou "proxy", selon la terminologie anglo-saxonne), servant de représentant, notamment vis-à-vis du module relais local, des dispositifs UPnP du réseau distant.

Selon un autre mode de réalisation, le procédé selon l'invention comprend en outre :
- une étape de réception, par l'intermédiaire du deuxième module relais, d'une requête destinée à un dispositif UPnP du réseau local,
- une étape de transmission de ladite requête au dispositif UPnP concerné;
- une étape de transmission, audit deuxième module relais, d'une réponse à ladite requête construite à partir de la réponse fournie par le dispositif UPnP concerné.

Le module relais distant communique avec les entités UPnP du réseau local par l'intermédiaire du module relais local aussi bien pour l'envoi de requêtes que pour la réception des réponses à ces requêtes. Le module relais local, coopérant avec le module relais distant, constitue une entité mandataire (ou "proxy", selon la terminologie anglo-saxonne), servant de représentant, notamment vis-à-vis du module relais distant, des dispositifs UPnP du réseau local qui ne sont pas capables de communiquer avec une entité extérieure à ce réseau local et/ou une entité non UPnP.

Selon un autre mode de réalisation, le procédé selon l'invention comprend en outre une étape d'enregistrement pour au moins un dit deuxième module relais de données représentant une autorisation ou interdiction de répondre à une requête provenant de ce deuxième module relais. Ceci permet de sécuriser les échanges effectués entre le module relais local et les modules relais distant, en ce que le module relais local ne pourra transmettre des réponses qu'aux seuls modules relais distants connus pour lesquels il dispose d'une autorisation de réponse.

Selon un autre mode de réalisation, le procédé selon l'invention comprend en outre, lorsqu'une requête ou réponse à requête, destinée à être transmise par le premier module relais à un dit deuxième module relais, comprend une adresse d'un contenu référencé par un serveur de contenu du réseau local, une étape de conversion de cette adresse en une adresse convertie désignant un module d'interconnexion d'une passerelle d'accès au réseau local comme l'entité auprès de laquelle ce contenu est susceptible d'être obtenu. Ceci a pour effet d'éviter les conflits d'adresses pouvant apparaître du fait du partage des contenus référencés dans un réseau distant avec les entités du réseau local.

Selon un autre mode de réalisation, le procédé selon l'invention comprend en outre, lorsqu'une requête ou réponse à requête, reçue par le premier module relais et provenant d'un dit deuxième module relais, comprend une adresse d'un contenu référencé par un serveur de contenu du réseau distant, une étape de conversion de cette adresse en une adresse convertie désignant un module d'interconnexion d'une passerelle d'accès au réseau local comme l'entité auprès de laquelle ce contenu est susceptible d'être obtenu. Ceci a pour effet d'éviter les conflits d'adresses pouvant apparaître du fait du partage des contenus référencés dans un réseau distant avec les entités du réseau local.

Selon un autre mode de réalisation, le procédé selon l'invention comprend en outre étape de pilotage d'un dispositif UPnP du réseau local par l'intermédiaire d'un point de contrôle UPnP du réseau local. Le module relais local est de ce fait également capable de piloter des entités UPnP du réseau local. Il devient possible, de manière transparente pour un utilisateur, de piloter par l'intermédiaire de ce module relais local, aussi bien une entité UPnP du réseau local qu'une entité UPnP d'un réseau distant.

Selon un autre mode de réalisation, le procédé selon l'invention comprend en outre :
- une étape d'interrogation d'un point de contrôle UPnP du réseau local pour obtenir au moins une identification d'un premier dispositif UPnP détecté par ce point de contrôle UPnP dans le premier réseau;
- une étape d'enregistrement de l'identification reçue en association avec des données d'identification identifiant le premier module relais comme entité via laquelle le premier dispositif UPnP est susceptible d'être piloté.

Ainsi, le module relais local dispose d'identifiants des entités UPnP du réseau local, qu'il peut utiliser pour identifier les entités qu'il souhaite piloter par l'intermédiaire d'un point de contrôle UPnP.

Selon un autre mode de réalisation, le procédé selon l'invention comprend en outre une étape de constitution d'une liste d'au moins un dispositif UPnP susceptible d'être piloté à partir du premier module relais, comprenant le ou les identifiants reçus d'un dit deuxième module relais ou d'un point de contrôle UPnP du réseau local Le module relais local étant capable de connaître aussi bien les identifiants de dispositifs UPnP du réseau local ou ceux de dispositifs UPnP d'un réseau distant, il devient possible, de manière transparente pour un utilisateur, de piloter, par l'intermédiaire de ce module relais local, aussi bien une entité UPnP du réseau local qu'une entité UPnP d'un réseau distant.

Selon un autre mode de réalisation, le procédé selon l'invention comprend en outre une étape d'enregistrement de données d'identification d'au moins un dit deuxième module relais d'un réseau distant en association avec un identifiant d'un contact, utilisateur de ce réseau distant. De préférence, la gestion et l'identification des modules relais distants avec lequel le module relais local est capable de communiquer s'effectuent par association avec des contacts, utilisateurs d'un réseau distant et considérés comme des amis d'au moins un utilisateur du réseau local. L'accès au réseau local pourra n'être autorisé que pour des utilisateurs connus de ce dernier utilisateur.

Les différents modes de réalisation mentionnés ci-dessus sont combinables entre eux pour la mise en oeuvre de l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Corrélativement, l'invention concerne, selon un deuxième aspect, un module relais d'un réseau local, dit module relais local, configuré pour communiquer avec au moins un deuxième module relais d'un réseau distant et comprenant:
- des moyens d'obtention, via un dit deuxième module relais, d'au moins un identifiant d'un dispositif UPnP détecté dans un dit réseau distant par un point de contrôle UPnP associé audit deuxième module relais;
- des moyens d'enregistrement d'au moins un identifiant reçu en association avec des données d'identification du deuxième module relais ayant fourni ledit au moins un identifiant;
- des moyens de pilotage d'un dispositif UPnP dudit réseau distant par l'intermédiaire du point de contrôle associé au deuxième module relais, identifié par les données d'identification enregistrées en association avec un identifiant de ce dispositif UPnP. Les avantages énoncés pour le procédé selon l'invention sont directement transposables directement au module relais selon l'invention.

Plus généralement, le module relais selon l'invention comprend des moyens de mise en oeuvre des étapes du procédé selon l'invention.

L'invention concerne, selon un troisième aspect, un module relais d'un réseau distant configuré pour communiquer avec un premier module relais selon le deuxième aspect de l'invention, ce module relais comprenant:
- des moyens pour fournir audit premier module relais au moins un identifiant d'un dispositif UPnP détecté dans le réseau distant par un point de contrôle UPnP associé audit module relais;
- des moyens de pilotage d'un dispositif UPnP dudit réseau distant sur requête provenant du premier module relais.

L'invention concerne, selon un quatrième aspect, un point de contrôle UPnP d'un premier réseau associé à un premier module relais relais selon le troisième aspect de l'invention:
- des moyens pour fournir au premier module relais au moins un identifiant d'un dispositif UPnP détecté ledit point de contrôle UPnP;
- des moyens de pilotage d'un dispositif UPnP du premier réseau configurés pour, sur requête du premier module relais, transmettre à un dit dispositif UPnP une requête UPnP.

Par point de contrôle, on entend une entité UPnP conçue pour détecter la présence dans le réseau de dispositifs UPnP et pour piloter ces dispositifs au moyen de commandes UPnP. Il s'agit typiquement d'entités nommées dans le standard UPnP / DLNA : «Control Point » (CP), « Digital Media Controller » (DMC) ou encore « Digital Media Player » (DMP), cette dernière entité intégrant les fonctions d'un DMC.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un module relais selon l'invention;
- la figure 2 représente de manière schématique une architecture d'une set-top-box, utilisée dans un mode de réalisation de l'invention et intégrant un module relais selon l'invention;
- les figures 3 à 6 représentent de manière schématique les étapes d'un procédé selon l'invention selon un mode de réalisation, dans le cas d'un premier scénario d'utilisation;
- les figures 7 à 10 représentent de manière schématique les étapes d'un procédé selon l'invention selon un mode de réalisation, dans le cas d'un deuxième scénario d'utilisation.

L'invention est décrite plus en détail dans le cas de son application au pilotage d'entités distantes, localisées dans un premier réseau, dit réseau distant, à partir d'un équipement d'un réseau, dit réseau local, distinct de ce réseau distant. Elle vient résoudre un problème bloquant de communication apparaissant lorsque ni l'équipement ni le réseau local n'est doté de moyens de communication avec ce réseau distant ou ces entités distantes.

Ces entités distantes sont par exemple des entités pilotables au moyen du protocole UPnP. L'invention permet notamment de piloter des d'entités UPnP d'un réseau distant à partir d'un réseau local, et ce, comme si cette entité distante faisait partir du réseau local, et de manière transparente pour un utilisateur du réseau local.

L'invention prévoit en effet une extension du mécanisme de commande UPnP, en apportant la possibilité de piloter des d'entités UPnP d'un réseau distant à partir d'un réseau local. De ce fait, l'invention remédie à une limitation inhérente au protocole UPnP, tel que prévu dans le standard UPnP, qui ne permet actuellement, à partir d'un équipement d'un réseau local, que la commande d'entités UPnP de ce même réseau local.

A titre d'exemple, l'invention est applicable à la restitution, par un dispositif de restitution d'un réseau local, de contenus référencés par un serveur de contenu d'un réseau distant ainsi qu'à la restitution, par un dispositif de restitution d'un réseau distant, de contenus référencés par un serveur de contenu d'un réseau local. Ces contenus sont par exemple des contenus multimédia (vidéo et / ou morceaux de musique).

Le serveur de contenus est par exemple un serveur de contenus conforme au standard UPnP (Universal Plug and Play). Un tel serveur de contenu est nommé "Digital Media Server" (DMS) dans le contexte de l'architecture UPnP. Le dispositif de restitution est par exemple un dispositif de restitution conforme au standard UPnP (Universal Plug and Play). Un tel serveur de contenu est nommé "Digital Media Renderer" (DMR) dans le contexte de l'architecture UPnP.

L'invention est également applicable à la commande à distance d'autres types d'entités conformes au standard UPnP, notamment à la commande de dispositifs nommés "Digital Media Printer".

Le standard UPnP fournit des mécanismes et une architecture permettant une mise en relation, de type réseau de pairs, entre les entités UPnP. Chaque entité UPnP peut être intégrée physiquement dans un des terminaux du réseau local ou encore dans un équipement de type passerelle d'interconnexion (Gateway), set-top-box (STB), routeur ou serveur de stockage de type NAS (Network Attached Storage), etc. Les mécanismes de communication prévus dans le standard UPnP sont conçus pour permettre une interopérabilité entre les entités UPnP. Le protocole UPnP utilise notamment les protocoles TCP/UDP/IP (Transmission Control Protocol/User Datagram Protocol/Internet Protocol) pour le transport des requêtes UPnP.

Dans le contexte de ce document, une entité est dite entité UPnP si elle est conforme au standard UPnP ou à un autre standard équivalent ou dérivé, notamment si elle utilise un protocole de commande conforme à un tel standard.

Le mécanisme proposé par l'invention est en outre transposable à d'autres protocoles, servant à la commande d'entités d'un réseau, par exemple le protocole "BONJOUR".

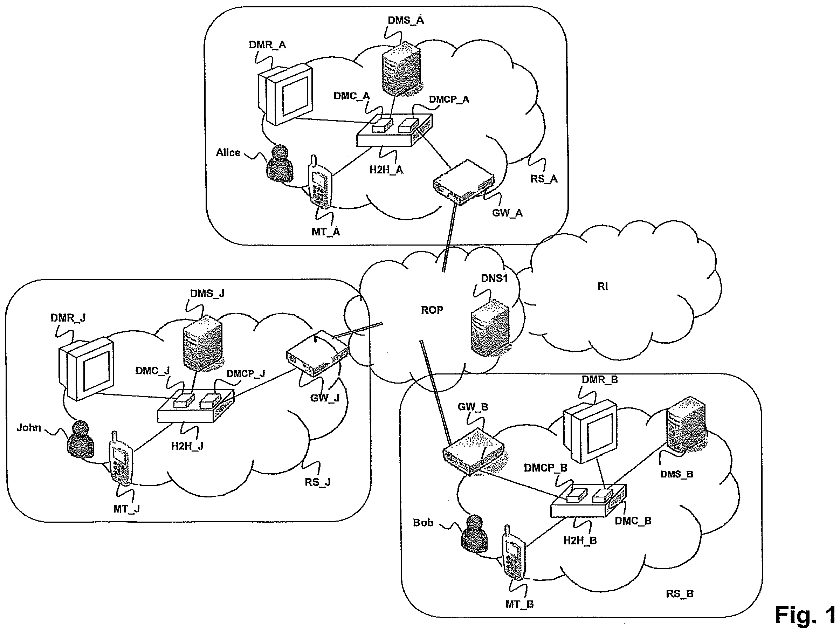

Le système représenté à la figure 1 est organisé autour de trois réseaux locaux RS_A, RS_B et RS_J, sous forme chacun par exemple de réseau domestique, et d'un réseau étendu RI, par exemple le réseau Internet. Le réseau local RS_A (respectivement RS_B, respectivement RS_J) est supposé appartenir à un utilisateur nommé Alice (respectivement Bob, respectivement John).

Ce système comprend en outre les entités suivantes:
- un équipement MT_A de l'utilisateur Alice, sous forme par exemple de terminal mobile, dans lequel s'exécute une application logicielle HUI_A;
- des passerelles domestiques GW_A, GW_B, GW_J, servant de passerelle d'accès aux réseaux RS_A, RS_B, RS_J respectivement, ces passerelles réalisant l'interconnexion des équipements connectés à l'un de ces réseaux avec le réseau étendu RI, via le réseau ROP d'un opérateur, fournisseur d'accès au réseau étendu RI,
- des serveurs de contenus DMS_A, DMS_B, DMS_J, conformes au standard UPnP, connectés respectivement aux réseaux RS_A, RS_B, RS_J;
- des dispositifs de restitution de contenus DMR_A, DMR_B, DMR_J, conformes au standard UPnP, connectés respectivement aux réseaux RS_A, RS_B, RS_J;
- des points de contrôle DMC_A, DMC_B, DMC_J, conformes au standard UPnP, connectés aux réseaux RS_A, RS_B, RS_J respectivement;
- des modules relais DMCP_A, DMCP_B, DMCP_J, associés respectivement aux points de contrôle DMC_A, DMCJ3, DMC_J, connectés respectivement aux réseaux RS_A, RS_B, RS_J;
- un serveur DNS1 de noms de domaine (Domain Name Serveur, DynDNS) présent dans un réseau opérateur ROP d'un opérateur de réseau, fournisseur de la passerelle domestique GW_A, ce réseau opérateur ROP formant réseau d'accès au réseau Internet pour les réseaux RS_A, RS_B et RS_J.

Le suffixe A, B ou J ajouté à une référence d'un module ou entité est ainsi utilisé pour préciser la localisation de chaque module : suffixe A si le module appartient au réseau d'Alice, suffixe B s'il appartient au réseau de Bob et suffixe J s'il appartient au réseau de John. Dans le contexte de l'invention, il est supposé, par souci de simplification de l'exposé, que deux modules de même référence (GW_, DMCP_, DMR_, DMS_, etc) mais de suffixes différents (A, B ou J) sont identiques fonctionnellement, en ce qu'ils jouent le même rôle vis-à-vis des entités du réseau auquel ils appartiennent respectivement.

### Serveurs de contenus

Chacun des serveurs de contenus DMS_A, DMS_B, DMS_J est un serveur de contenus conforme au standard UPnP, ou "Digital Media Server" (DMS). En conséquence, il présente une interface de commande conforme au standard UPnP et est pilotable uniquement au moyen de requêtes UPnP.

L'envoi d'une requête UPnP est réalisé usuellement au moyen d'un appel de fonction via une interface logicielle de programmation (API, Application Programming interface) de l'entité destinataire, représentant un "service UPnP".

### Dispositifs de restitutions

Chacun des dispositifs de restitutions DMR_A, DMR_B, DMR_J est un dispositif de restitution conforme au standard UPnP, ou "Digital Media Renderer" (DMR).

En conséquence, il présente une interface de commande conforme au standard UPnP et est pilotable uniquement au moyen de requêtes UPnP.

### Points de contrôle UPnP

Chacun des points de contrôle UPnP DMC_A, DMC_B, DMC_J est conforme au standard UPnP, ou DMC, « Digital Media Controller » ou CP, « Control Point ».

Conformément au mécanisme de découverte de dispositifs prévu dans le standard UPnP / DLNA, chaque point de contrôle est en charge de la détection de dispositifs UPnP connectés dans le réseau où se trouve ce point de contrôle. Ainsi chaque point de contrôle maintient à jour une liste des dispositifs UPnP connectés, et détecte aussi bien les apparitions (nouveau dispositif connecté) ou disparition (déconnexion d'un dispositif).

Chaque point de contrôle est conçu également pour envoyer des requêtes UPnP à tous les dispositifs UPnP présents dans le réseau auquel il appartient. Ces requêtes sont notamment les requêtes UPnP nommées "Browse" de consultation du répertoire de contenus (CDS, Content Directory Service) d'un serveur de contenu UPnP ou des requêtes UPnP nommées "SetAVTransportURI" ou "Play" pour piloter la restitution d'un contenu sur un dispositif de restitution UPnP de type DMR (Digital Media Renderer).

Dans le cadre de l'invention, le point de contrôle DMC_A, DMC_B, DMC_J est associé à un module relais DMCP_A, DMCP_B, DMCP_J et communique à ce module relais les informations sur les dispositifs UPnP détectés : identifiant, description des services mis en oeuvre par ces dispositifs.

Dans un mode de réalisation, chaque point de contrôle notifie le module relais qui lui est associé en cas de connexion / déconnexion d'un dispositif UPnP. Le module relais peut ainsi signaler cette connexion / déconnexion à tout autre module relais distant avec lequel il a établi une liaison de communication. Le module relais distant en question peut alors :
- Soit cesser d'envoyer des requêtes à traduire vers le point de contrôle ayant détecté une déconnexion;
- Soit, au contraire, commencer à envoyer des requêtes à traduire vers le point de contrôle ayant détecté une connexion d'un dispositif UPnP, requêtes qui seront traduites en requêtes UPnP puis émises à destination de ce dispositif UPnP .

### Passerelles

Les passerelles domestiques GW_A, GW_B, GW_J sont supposées identiques fonctionnellement. Les fonctions de la passerelle GW_A, vis-à-vis des entités du réseau RS_A, qui sont décrites ici en détail, sont transposables directement aux autres passerelles GW_B, GW_J.

La passerelle GW_A est une passerelle pour l'interconnexion du réseau RS_A avec le réseau Internet RI via le réseau ROP d'un fournisseur d'accès. Elle permet aux terminaux du réseau RS_A d'accéder au réseau Internet RI. Inversement, la passerelle permet - sous réserve que des droits pour un tel accès soient accordés - à des équipements d'un réseau autre que le réseau RS_A de communiquer avec un équipement du réseau local RS_A.

La passerelle GW_A comprend un module d'interconnexion CG_A mettant en oeuvre les fonctions d'interconnexion entre le réseau RS_A et le réseau Internet RI. Il comprend dans ce but une première interface de communication pour la communication avec les entités du réseau RS_A et une deuxième interface de communication pour la communication via le réseau Internet RI, notamment avec les entités externes au réseau RS_A. Cette deuxième interface est utilisée pour communiquer avec un fournisseur d'accès à Internet (Internet Service Provider, ISP) de l'opérateur du réseau ROP, ainsi qu'avec le serveur de noms de domaine DNS1.

Le module d'interconnexion CG_A comprend un premier sous-module, nommé module d'interconnexion d'entrée ICG_A, apte à recevoir un flux de données entrant dans le réseau RS_A, en provenance d'un réseau distant et à le transmettre à un équipement destinataire de ce réseau RS_A. En ce sens, le module d'interconnexion d'entrée ICG _A agit comme un proxy inverse.

Le module d'interconnexion d'entrée OCG_A est en outre apte à déchiffrer un flux de données entrant après réception, ce qui, lorsque le flux de données est émis conformément au protocole HTTPS, revient à effectuer une conversion du protocole HTTPS vers HTTP.

Le module d'interconnexion CG_A comprend en outre un autre sous-module, nommé un module d'interconnexion de sortie OCG_A, apte à émettre un flux de données sortant du réseau RS_A à destination d'un équipement d'un réseau distant. Le module d'interconnexion de sortie OCG_A est en outre apte à chiffrer un flux de données sortant avant émission, ce qui, lorsque le flux de données est émis conformément au protocole HTTP, revient à effectuer une conversion du protocole HTTP vers HTTPS.

La présence des modules tCG_A et OCG_A réalisant des conversions de HTTP vers HTTPS et inversement, permet la sécurisation des données transmises d'un réseau à un autre, notamment des contenus transmis à destination d'un dispositif de restitution, et vient combler une lacune fonctionnelle des dispositifs de restitution UPnP. En effet, ceux-ci ne supportant pas le protocole HTTPS, ils ne peuvent communiquer de manière sécurisée avec une entité extérieure au réseau dans lequel ils se trouvent.

De même que la passerelle GW_A, la passerelle GW_B (respectivement GW_J) comprend un module d'interconnexion d'entrée ICG_B (respectivement ICG_J) et un module d'interconnexion de sortie OCG_B (respectivement OCG_J), identiques fonctionnellement aux modules d'interconnexion d'entrée ICG_A et de sortie OCG_A qui viennent d'être décrits.

### Serveur de nom de domaine DNS1

Le serveur DNS1 maintient une table de correspondance entre des adresses publiques et des noms affectés aux équipements qu'il gère. En effet, le nom affecté à la passerelle domestique GW_A est statique, c'est-à-dire ne change pas, mais l'adresse publique de la passerelle domestique GW_A change périodiquement, Il est donc nécessaire pour communiquer avec cette passerelle domestique GW_A de connaître son adresse publique courante, et pour cela d'interroger le serveur DNS1 à partir du nom de la passerelle domestique GW_A. Ce nom correspond au nom du domaine réseau géré par cette passerelle, et est par exemple sous la forme:
myhome.homedns.org

Ce nom peut être affecté automatiquement par l'opérateur de réseau fournissant la passerelle domestique GW_A ou configuré manuellement par un utilisateur de cette passerelle, la configuration du nom de domaine associé à la passerelle domestique GW_A étant dans ce deuxième cas effectuée au moyen du module d'interconnexion CG_A qui communique dans ce but avec le serveur DNS1.

Le module d'interconnexion CG_A comprend en outre un module d'adressage, sous forme de dispositif UPnP IGD (Intemet Gateway Device) ou de CGI (Common Gateway Interface), en charge du mappage des adresses et ports publics vis-à-vis des adresses et ports privés des équipements du réseau RS_A, pour permettre à un dispositif extérieur au réseau RS_A de communiquer avec un tel équipement de ce réseau RS_A au moyen d'une adresse et d'un numéro de port publics: à réception de données destinée à cette adresse et port publics, le module d'interconnexion CG_A effectue une traduction d'adresse en déterminant l'adresse et le port internes de l'équipement du réseau RS_A destinataire de ces données.

Ce module d'adressage CG_A est également utilisé notamment pour permettre une mise en communication d'un module relais distant DMCP_B ou DMCP_J avec le module relais DMCP_A.

### Modules relais

Les modules relais DMCP_A, DMCP_B, DMCP_J sont identiques fonctionnellement. Les fonctions du module relais DMCP_A, vis-à-vis des entités du réseau RS_A, qui sont décrites ici en détail, sont transposables directement aux autres modules relais DMCP_B, DMCP_J.

Le module relais DMCP_A est une entité mandataire (entité proxy, selon la terminologie anglo-saxonne): il sert d'intermédiaire de communication entre l'application HUI_A, exécutée dans le terminal MT_A, et le point de contrôle UPnP du réseau RS_A d'Alice. Grâce à la présence du module relais DMCP_A, le point de contrôle UPnP du réseau RS_A d'Alice est pilotable à distance par une entité non-conforme à UPnP et/ou ne faisant pas partie du réseau.

Le module relais DMCP_A est apte à dialoguer avec les modules relais des réseaux distants, en l'occurrence avec le module relais DMCP_B, respectivement le module relais DMCP_C, s'exécutant au sein d'un équipement du réseau RS_B de Bob, respectivement du réseau RS_J de John. Ce dialogue s'effectue selon une méthode appropriée, par exemple au moyen d'appels de procédure distante ou d'une requête de type "web service", conforme à un protocole choisi par exemple parmi XML-RPC, SOAP et REST. Les requêtes échangées entre le module relais DMCP_A et le module relais DMCP_B ou DMCP_J sont dans ce cas transportées en utilisant le protocole HTTP.

Afin de remédier aux éventuels conflits d'adresse qui peuvent apparaître du fait de l'accès à des contenus stockés dans un réseau à partir d'entité d'un autre réseau, le module relais DMCP_A met en oeuvre deux fonctions de traduction des adresses de contenus.

Dans le standard UPnP, l'adresse d'un contenu est sous forme d'URI (Uniform Ressource Identifier) et stockée dans les métadonnées de ce contenu par le serveur de contenus UPnP qui référence ce contenu. Une adresse ORIG_URI_C d'un contenu C est sous la forme :
http://DMS IP/objectID=1234
où :
- 'DMS_IP' est l'adresse IP du serveur de contenu référençant ce contenu;
- '1234' est un identifiant du contenu C affecté par le serveur de contenu référençant ce contenu.

La première fonction de traduction d'adresse, opérée par le module relais DMCP_A, est nommée fonction "conversion source". Elle consiste à modifier une adresse ORIG_URI_C d'un contenu, de manière à désigner le module d'interconnexion d'entrée ICG_A comme l'entité auprès de laquelle ce contenu est susceptible d'être obtenu. Cette modification est effectuée de manière à conserver l'adresse originale ORIG_URI_C dans l'adresse SOURCE_URI_C obtenue après conversion.

Une telle traduction d'adresse "conversion source" est nécessaire pour éviter d'éventuels conflits d'adresse avec des serveurs de contenus ou contenus provenant d'un réseau différent de celui dans lequel est stocké le contenu C. Elle est opérée par le module relais DMCP_A sur toutes les adresses URI de contenus référencés par un serveur de contenu du réseau RS_A, adresses qui sont contenues dans des requêtes ou réponses à requête émises par le module relais DMCP_A à destination d'un réseau distant, RS_B ou RS_J par exemple.

La fonction "conversion source" consiste à utiliser, dans l'adresse URI d'un contenu, l'adresse IP et le numéro de port du module d'interconnexion d'entrée ICG_A comme identifiant de l'entité auprès de laquelle ce contenu est susceptible d'être obtenu, de manière à ce que l'adresse URI après traduction soit adaptée pour un accès à ce contenu via le module d'interconnexion d'entrée ICG_A de la passerelle domestique GW_A, à partir d'une entité externe au réseau RS_A.

L'adresse SOURCE_URI_C obtenue après traduction par application de la fonction "conversion source" est sous la forme :
http://ICG A IP:ICG A PORT/getContent?uri=ORIG URI CI
où
- 'ICG_A_IP' est l'adresse IP du module d'interconnexion d'entrée ICG_A, c'est-à-dire l'adresse IP publique de la passerelle domestique GW_A;
- 'ICG_A_PORT' est le numéro de port Internet du module d'interconnexion d'entrée ICG_A.

Cette opération de traduction d'adresse est susceptible d'être opérée par le module relais DMCP_A, dans la mesure où celui-ci a connaissance des paramètres ICG_A_IP et ICG_A_PORT.

La transformation inverse, consistant à extraire l'adresse URI originale avant transformation (ORIG_URI_C) est effectuée par le module d'interconnexion d'entrée ICG_A lorsqu'une requête ou réponse entrante, comprenant une telle adresse SOURCE_URI_C, émise en provenance d'un réseau distant, RS_B ou RS_J, et à destination d'une entité du réseau local RS_A, parvient au module d'interconnexion d'entrée ICG_A. La requête comportant l'adresse originale ORIG_URI_C est ensuite émise par le module d'interconnexion d'entrée ICG_A à destination d'une entité du réseau local RS_A identifié dans l'adresse ORIG_URI_C comme entité auprès de laquelle le contenu peut être obtenu.

La deuxième fonction de traduction d'adresse, opérée par le module relais DMCP_A, est nommée fonction "conversion destination". Elle consiste à modifier une adresse SOURCE_URI_C d'un contenu, adresse ayant déjà subi le plus souvent la fonction de 'conversion source' opérée par un module relais distant DMCP_B ou DMCP_J, de manière à désigner le module d'interconnexion de sortie OCG_A comme l'entité auprès de laquelle ce contenu est susceptible d'être obtenu. Cette modification est effectuée de manière à conserver l'adresse SOURCE _URI_C dans l'adresse DEST_URI_C obtenue après conversion.

Une telle traduction d'adresse "conversion destination" est nécessaire pour éviter d'éventuels conflits d'adresse avec des serveurs de contenus ou contenus provenant d'un réseau différent de celui dans lequel est stocké le contenu C. Elle est opérée par le module relais DMCP_A sur toutes les adresses URI de contenus référencés par un serveur de contenu d'un réseau distant RS_B ou RS_J, adresses qui sont contenues dans des requêtes ou réponses à requête reçues par le module relais DMCP_A en provenance d'un réseau distant, RS_B ou RS_J par exemple.

La fonction "conversion destination" consiste à utiliser, dans l'adresse URI d'un contenu, l'adresse IP et le numéro de port du module d'interconnexion de sortie OCG_A comme identifiant de l'entité auprès de laquelle ce contenu est susceptible d'être obtenu, de manière à ce que l'adresse URI après traduction soit adaptée pour un accès à ce contenu via le module d'interconnexion de sortie OCG_A, à partir d'une entité interne au réseau RS_A.

L'adresse DEST_URI_C obtenue après traduction par application de la fonction "conversion destination" est de la forme :
http://OCG A IP:OCG A PORT/getContent?uri=SOURCE URI C
où
- 'OCG_A_IP' est l'adresse IP interne du module d'interconnexion de sortie OCG_A, c'est-à-dire l'adresse IP privée (interne au réseau RS_A) de la passerelle domestique GW_A;
- 'OCG_A_PORT' est le numéro de port Internet interne du module d'interconnexion de sortie OCG_A.

Cette opération de traduction d'adresse est susceptible d'être opérée par le module relais DMCP_A, dans la mesure où celui-ci a connaissance des paramètres 'OCG_A_IP et OCG_A_PORT.

La transformation inverse, consistant à extraire l'adresse URI originale avant transformation (SOURCE_URI_C) est opérée par le module d'interconnexion de sortie OCG_A lorsqu'une requête ou réponse sortante, comprenant une telle adresse DEST_URI_C, émise à partir du réseau local RS_A et à destination d'un réseau distant RS_B ou RS_J, parvient au module d'interconnexion de sortie OCG_A. La requête, comportant l'adresse SOURCE_URI_C, est ensuite émise par le module d'interconnexion de sortie OCG_A à destination d'un module d'interconnexion d'entrée d'un réseau distant RS_B ou RS_J identifié dans l'adresse SOURCE_URLC comme entité auprès de laquelle le contenu peut être obtenu.

Le module relais DMCP_A est en outre conçu pour agréger des listes de dispositifs UPnP obtenues par l'intermédiaire d'un module relais distant (DMCP_B ou DMCP_J) avec une liste de dispositif UPnP du réseau local RS_A. Ces listes de dispositifs sont notamment des listes de serveurs de contenus ou des listes de dispositifs de restitution.

Le module relais DMCP_A est en outre conçu pour recevoir une requête, par exemple conforme au protocole HTTP, en provenance de l'application HUI_A, mise en oeuvre dans le terminal MT_A d'Alice. Chaque requête HTTP ainsi reçue est destinée à être transmise à un point de contrôle UPnP: soit le point de contrôle UPnP (DMC_A) qui est associé au module relais DMCP_A, soit un point de contrôle UPnP distant (DMC_B ou DMC_J) associé à un module relais distant (DMCP_B ou DMCP_J).

Lorsque le point de contrôle UPnP destinataire est dans le réseau local, la requête est convertie par le module relais DMCP_A en commande, puis envoyée à ce point de contrôle UPnP local. La réponse à cette commande est transférée au module relais DMCP_A émetteur, par l'intermédiaire du point de contrôle UPnP local.

Lorsque le point de contrôle UPnP est dans un réseau distant, la requête est d'abord transmise, sous forme de requête HTTP, par le module relais DMCP_A au module relais distant {DMCP_B ou DMCP_J) associé à ce point de contrôle UPnP distant, avant d'être traduite par ce module relais distant puis transférée sous forme de commande à ce point de contrôle UPnP distant. La réponse à cette commande est transférée au module relais DMCP_A émetteur, successivement par le point de contrôle UPnP distant puis par le module relais distant (DMCP_B ou DMCP_J), associé à ce point de contrôle UPnP distant.

Le module relais DMCP_A sert ainsi, pour le compte de l'application HUI_A, de "représentant" du point de contrôle UPnP DMC_A.

En outre, le module relais DMCP_A sert d'intermédiaire de communication pour le module relais distant (DMCP_B ou DMCP_J), lui-même "représentant" d'un point de contrôle UPnP distant (DMC_B ou DMC_J).

Grâce à la présence des différents modules relais DMCP_A, DMCP_B et DMCP_J, communiquant entre eux, et servant chacun de représentant d'un point de contrôle UPnP, chacune des entités UPnP d'un des réseaux dotés de ces modules relais, est pilotable à distance à partir d'un équipement ne faisant pas partie du réseau d'appartenance d'une telle entité.

La commande reçue par un point de contrôle UPnP (local ou distant) est elle-même traduite en requête UPnP, conforme au standard UPnP, émise à destination d'une entité UPnP du réseau dans lequel se trouve le point de contrôle visé, le point de contrôle UPnP (local ou distant) recevant une réponse à la requête UPnP, réponse à partir de laquelle ce point de contrôle émet, à destination du module relais qui lui est associé, une réponse à la commande qu'il a lui-même reçue.

### Application

L'application HUI_A mise en oeuvre dans le terminal MT_A d'Alice est utilisée pour envoyer différentes requêtes au module relais DMCP_A:
- requête d'identification des serveurs de contenus UPnP susceptibles d'être pilotés à partir du module relais DMCP_A;
- requête d'identification des dispositifs de restitution UPnP susceptibles d'être pilotés à partir du module relais DMCP_A;
- requête de consultation des contenus référencés par un serveur de contenus UPnP susceptible d'être piloté à partir du module relais DMCP_A;
- requête de restitution, par un dispositif de restitution UPnP susceptible d'être pilotés à partir du module relais DMCP_A, d'un contenu référencé par un serveur de contenus UPnP susceptible d'être piloté à partir du module relais DMCP_A.

Les requêtes émises par l'application HUI_A sont émises par exemple conformément au protocole HTTP, puis traduites par le module relais DMCP_A en commande pour être envoyées au point de contrôle UPnP.

En pratique, pour toute requête UPnP susceptible d'être émise par un point de contrôle UPnP vers un dispositif UPnP, l'application HUI_A est susceptible d'émettre une requête à destination du module relais DMCP_A, pour que ce module relais envoie une commande au point de contrôle DMC_A qui lui est associé et que ce point de contrôle envoie à ce dispositif UPnP la requête UPnP en question.

Une interface utilisateur est mise à disposition d'un utilisateur du terminal MT_A pour que l'utilisateur puisse piloter l'application HUI_A, notamment sélectionner un contenu multimédia à restituer et déclencher la restitution de ce contenu.

Cette interface utilisateur est par exemple constituée par une page Web, hébergée par le module relais DMCP_A formant serveur Web, et transmise au terminal MT_A lors d'une session de communication établie à travers le réseau Internet RI avec le module relais DMCP_A, le terminal MT_A et le module relais DMCP_A communiquant par exemple au moyen du protocole HTTP. Cette interface utilisateur peut également être incluse dans un logiciel, embarqué sur le terminal MT_A et communiquant avec le module relais DMCP_A via le protocole HTTP.

### Module de gestion de réseau distant

Le module relais DMCP_A est couplé à un module de gestion de réseau distant RNM_A (RNM pour "Remote Network Management"). Ce module est utilisé pour mémoriser des données d'adressage d'entités des réseaux distants. Dans le cas du réseau RS_A appartenant à Alice, ce module RNM_A est conçu pour enregistrer, en association avec une identification d'un contact d'Alice (adresse email, nom ou surnom du contact, numéro de téléphone ou autre information sur ce contact), des données d'adressage de la passerelle d'accès au réseau distant appartenant à ce contact.

Si, par exemple, Bob fait partie des contacts d'Alice, des données d'adressage de la passerelle d'accès GW_B du réseau de Bob sont mémorisées sous forme de nom de domaine réseau ou de nom public de passerelle, nom à partir duquel l'adresse IP couramment affectée à la passerelle d'accès GW_B peut être obtenue par interrogation du serveur DNS1.

Lorsque le module relais DMCP_B ou DMCP_J d'un réseau distant n'est pas intégré dans la passerelle d'accès GW_B ou GW_J à un réseau distant, le module RNM_A est conçu pour enregistrer, en association avec une identification d'un contact d'Alice, des données d'adressage d'au moins un module relais DMCP_B ou DMCP_J présent dans ce réseau distant. Ces données d'adressage comprennent par exemple, un numéro de port externe de la passerelle d'accès GW_B ou GW_J, mappé sur une adresse IP interne au réseau distant, affectée, dans ce réseau distant, au module relais DMCP_B ou DMCP_J. Une communication avec le module relais est susceptible d'être établie par une entité externe au réseau distant, au moyen de ce numéro de port et du nom du domaine réseau associé à la passerelle d'accès GW_B ou GW_J.

Lorsque le module relais DMCP_B ou DMCP_J d'un réseau distant n'est pas intégré dans la passerelle d'accès GW_B ou GW_J à un réseau distant, le nom du domaine réseau associé à la passerelle d'accès GW_B ou GW_J au réseau distant est suffisant pour communiquer avec ce module relais DMCP_B ou DMCP_J à partir d'une entité externe à ce réseau distant.

L'enregistrement des données d'adressage d'un module relais d'un réseau d'un contact d'Alice peut être effectué manuellement par Alice, à travers une interface utilisateur prévue à cet effet, à partir d'informations fournies par Bob. Il peut être également prévu, lorsque Bob autorise Alice à accéder à son réseau, une fonction dans l'application HUI_B de Bob qui déclenche l'envoi par le terminal MT_B d'un message comprenant des données d'adressage du module relais DMCP_B, à destination d'Alice.

Chacun des modules relais DMCP_A, DMCP_B, DMCP_J, est conçu pour interroger le module de gestion de réseau distant RNM_A, RNM_B ou RNM_C qui lui est respectivement associé, en vue d'obtenir des données d'adressage d'un module relais présent dans un réseau distant.

### Table de mappage

Le module relais DMCP_A est couplé à une table de mappage UMT_A (UMT pour "UDN Mapping Table") qui gère les associations entre identifiants de dispositifs UPnP et données d'adressages des modules relais par l'intermédiaire desquels ces modules peuvent être pilotés à partir d'un autre module relais. Dans le standard UPnP, les dispositifs UPnP sont identifiés par des identifiants UDN (Unique Device Name).

Cette table de mappage UMT_A est conçue pour, lorsque le dispositif UPnP est localisé dans un réseau distant donné, enregistrer, en association avec un identifiant UDN de ce dispositif UPnP, les données d'adressage d'un module relais distant présent dans ce réseau distant. Cette table de mappage UMT_A est conçue pour, lorsque le dispositif UPnP est localisé dans le réseau local dans lequel se trouve le module relais DMCP_A associé, enregistrer, en association avec un identifiant UDN de ce dispositif UPnP, des données d'adressage par défaut (par exemple de valeur nulle) indicatives du fait que le module relais, par l'intermédiaire duquel ce dispositif UPnP local est susceptible d'être piloté, est localisé dans le réseau local et correspond au module relais DMCP_A associé à cette table de mappage UMT_A.

Les données d'adressage d'un module relais d'un réseau servent de données d'identification de ce module relais et permettent à un dispositif externe à ce réseau de communiquer avec ce module relais. Elles comprennent:
- une identification de ce réseau, sous forme de nom de domaine réseau, connu du serveur DNS1, à partir duquel l'adresse IP de la passerelle d'accès à ce réseau peut être obtenue
- un numéro de port public, affecté à ce module relais par cette passerelle d'accès, à partir duquel le module d'adressage de la passerelle détermine une adresse et un numéro de port internes associés.

Chacun des modules relais DMCP_A, DMCP_B, DMCP_J, est conçu pour fournir à la table de mappage UMT_A, UMT_B ou UMT_J qui lui est associée, un identifiant UDN d'un dispositif UPnP d'un réseau distant et des données d'adressage d'un module relais (DMCP_B, DMCP_J dans le cas du module relais DMCP_A) ayant fourni cet identifiant et localisé dans le réseau distant dans lequel se trouve ce dispositif UPnP distant. Chacun des modules relais DMCP_A, DMCP_B, DMCP_J, est en outre conçu pour fournir à la table de mappage UMT_A, UMT_B ou UMT_J qui lui est associée, un identifiant UDN d'un dispositif UPnP du réseau local RS_A et des données d'adressage indiquant que le module relais DMCP_A via lequel ce dispositif UPnP local est présent dans le réseau local RS_A.

Inversement, chacun des modules relais DMCP_A, DMCP_B, DMCP_J, est conçu pour interroger la table de mappage UMT_A, UMT_B ou UMT_J qui lui est associée, en vue de connaître les données d'adressage d'un module relais distant (DMCP_B, DMCP_J dans le cas du module relais DMCP_A) auquel transmettre une requête destinée à un dispositif UPnP identifié par un identifiant UDN donné.

### Module de contrôle d'accès

Le module relais DMCP_A est couplé à un module de contrôle d'accès ACM_A (ACM pour "Access control Manager") qui gère les autorisations d'accès pour les modules relais distants (DMCP_B, DMCP_J dans le cas du module relais DMCP_A). Ce module est conçu pour enregistrer, en association avec une identification d'un module relais distant ou d'un réseau distant, une information représentative d'une autorisation ou d'une interdiction de répondre à une requête de ce module relais distant. Ces autorisations ou interdictions sont par exemple renseignées manuellement par Alice à travers une interface utilisateur prévue à cet effet. Les identifications sont enregistrées par exemple sous forme de données d'adressages de module relais, telles qu'enregistrées dans la table de mappage UMT_A et telles que configurées par le module RNM_A.

Selon un mode de réalisation, ces autorisations ou interdictions sont détaillées pour définir si un module relais distant est autorisé ou non à:
- accéder aux contenus du réseau local et/ou
- piloter les serveurs de contenus UPnP du réseau local et/ou
- piloter les dispositifs de restitution UPnP du réseau local.

Des règles plus précises de gestion des autorisations ou interdictions sont bien entendu envisageables: par contenu, par serveur de contenus UPnP, par dispositif de restitution UPnP, par opération demandée, etc.

Afin de vérifier les autorisations ou interdictions d'un module relais distant, une requête envoyée d'un module relais à un autre comprend une identification du module relais distant émetteur de cette requête ou du réseau dans lequel se trouve ce module relais distant. Cette identification est insérée soit en tant que paramètre de la requête, soit dans les données d'entête de la requête (dans les champs d'identification de l'émetteur de la requête). Toute autre méthode d'identification du module relais distant est également envisageable. Une authentification du module relais distant est également envisageable.

Chacun des modules relais DMCP_A, DMCP_B, DMCP_J, est conçu pour interroger le module de contrôle d'accès ACM_A, ACM_B ou ACM_J qui lui est associé, en vue de déterminer s'il est autorisé à répondre à une requête en provenance d'un module relais distant (DMCP_B, DMCP_J dans le cas du module relais DMCP_A) avec lequel il est susceptible de communiquer.

### Architecture

Les modules qui viennent d'être décrits peuvent être localisés dans différents équipements du réseau RS_A, du moment que ces modules sont capables de communiquer entre eux de la manière décrite.

Le module relais DMCP_A est intégré dans la passerelle domestique GW_A ou dans un autre équipement du réseau RS_A. Il est bien entendu envisageable cependant que les différentes fonctions de ce module soit implémentées de manière répartie, c'est-à-dire dans des équipements physiques distincts, sous réserve qu'un lien de communication soit prévu entre les entités mettant en oeuvre respectivement chacune de ces fonctions.

Lorsque le module relais DMCP_A n'est pas intégré dans la passerelle domestique GW_A, le module relais DMCP_A est conçu pour envoyer des données d'adressage au module d'adressage du module d'interconnexion CG_A afin que ce module d'adressage puisse router au module relais DMCP_A les requêtes qui lui sont destinées. Dans ce but, le module relais DMCP_A transmet au module d'adressage du module d'interconnexion CG_A un numéro de port et une adresse IP au moyen desquels le module relais DMCP_A est susceptible d'être joint. Ce numéro de port et adresse IP sont stockés en correspondance avec le nom de réseau public associé à la passerelle domestique GW_A et un numéro de port public affecté au module relais DMCP_A.

Lorsque le module relais DMCP_A est intégré dans la passerelle domestique GW_A aucun dispositif d'adressage n'est nécessaire dans la passerelle domestique GW_A pour joindre le module relais DMCP_A à partir d'un équipement externe au réseau RS_A.

Le module de gestion de réseau distant RNM_A, le module de contrôle d'accès ACM_A et la table de mappage UMT_A sont intégrés dans la passerelle GW_A, dans une set-top-box associée à cette passerelle, ou dans tout autre équipement du réseau RS_A possédant les ressources (processeur, mémoire, etc) nécessaires au fonctionnement de ces entités.

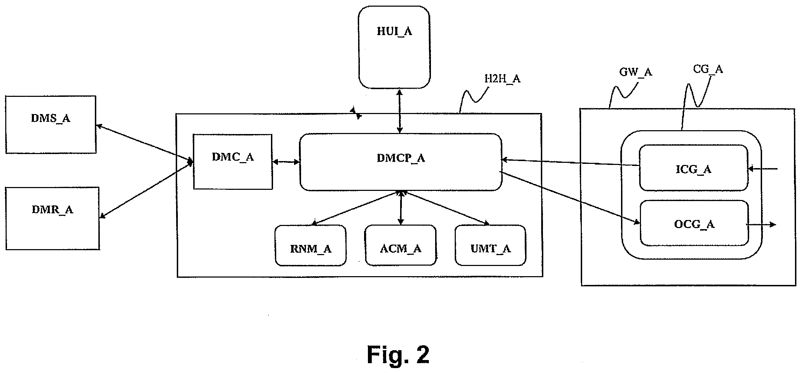

La figure 2 illustre un mode de réalisation où le module relais DMCP_A, le point de contrôle UPnP DMC_A, le module de gestion de réseau distant RNM_A, le module de contrôle d'accès ACM_A et la table de mappage UMT_A sont intégrés dans une set-top-box H2H_A communiquant avec la passerelle GW_A. Dans cette hypothèse, ces différents modules peuvent correspondre à des fonctions ou composants d'un même logiciel, la communication entre ces modules s'effectuant alors simplement par appel de fonction.

Le procédé de pilotage selon l'invention est décrit plus en détail dans le cadre de deux scénarii d'utilisation de l'invention.

### Premier scénario

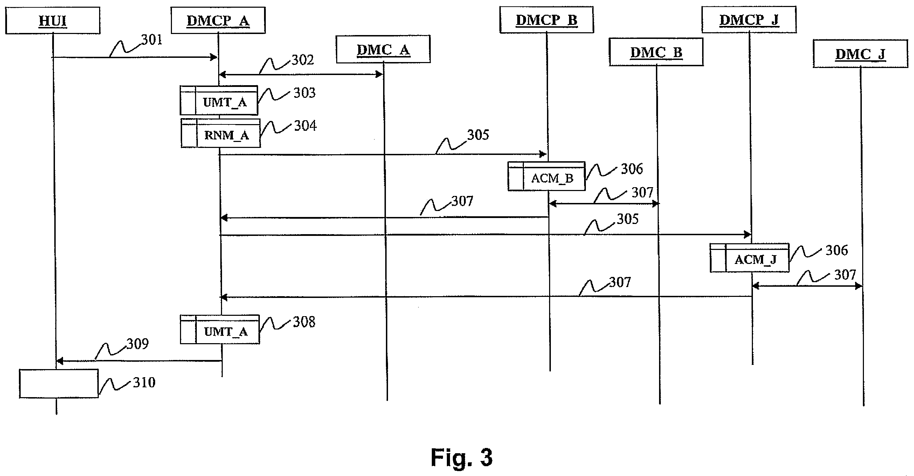

Un premier exemple du procédé de pilotage selon l'invention est décrit plus en détail au regard des figures 3 à 6 à travers un scénario au cours duquel Alice sélectionne, au moyen de son application HUI_A, un contenu C_B stocké sur un serveur de contenus DMS_B localisé dans le réseau RS_B de Bob et le restitue sur un dispositif de restitution UPnP DMR_A du réseau RS_A.

Dans ce contexte, le réseau RS_A d'Alice est nommé 'réseau local' et les autres réseaux RS_B et RS_J 'réseaux distants'. Il en est de même pour les entités (locales ou distantes) appartenant à ces réseaux.

Ce premier scénario comprend quatre phases successives.

Au cours de la première phase, représentée à la figure 3, Alice utilise son application HUI_A pour afficher la liste des dispositifs de restitution UPnP appartenant au réseau d'Alice, de Bob ou de John, et susceptibles d'être pilotés à partir du réseau d'Alice, puis pour choisir parmi ces dispositifs, le dispositif de restitution UPnP sur lequel elle veut effectuer la restitution du contenu C_B.

Lors de cette phase, le module relais DMCP_A obtient le ou les identifiants de dispositif de restitution UPnP des réseaux distants RS_B et/ou RS_J par l'intermédiaire du module relais DMCP_B et/ou DMCP_J de ce ou ces réseaux et du point de contrôle qui lui est associé.

A l'étape 301, l'application HUI_A envoie une requête nommée "GetAllMediaRenderers" au module relais local DMCP_A, afin d'obtenir la liste des dispositifs de restitution UPnP appartenant au réseau d'Alice, de Bob ou de John, et susceptibles d'être pilotés à partir du réseau d'Alice.

A l'étape 302, à réception d'une telle requête, le module relais local DMCP_A interroge le point de contrôle DMC_A, qui lui est associé dans le réseau local RS_A, pour obtenir la liste des dispositifs de restitution UPnP du réseau local RS_A d'Alice. Comme cela est connu, ces dispositifs UPnP ont été détectés dans ce réseau par le point de contrôle DMC_A par mise en oeuvre du mécanisme de découverte de dispositifs prévu dans le standard UPnP / DLNA. Dans la liste obtenue en retour, chaque dispositif de restitution est identifié par un identifiant UDN unique.

A l'étape 303, le module relais local DMCP_A met à jour la table de mappage UMT_A en enregistrant, en association avec chaque identifiant UDN reçu à l'étape 302, des données d'adressage identifiant le module relais ayant fourni cet identifiant UDN. En l'occurrence, du fait que la liste a été obtenue par le module relais local DMCP_A lui-même par interrogation du point de contrôle qui lui est associé, une donnée d'adressage par défaut (par exemple de valeur nulle) est enregistrée en association avec chacun des identifiants UDN reçus, afin de signifier qu'il s'agit d'un dispositif de restitution UPnP du réseau local.

A l'étape 304, le module relais local DMCP_A interroge le module de gestion des réseaux distants RNM_A pour obtenir des données d'adressages des modules relais distants, présents dans les réseaux distants des contacts d'Alice: en l'occurrence, ces modules relais distants sont les modules relais DMCP_B et DMCP_J des réseaux de Bob et John.

A l'étape 305, le module relais local DMCP_A interroge ensuite chaque module relais distant en utilisant les données d'adressage obtenues pour ce module, pour obtenir la liste des dispositifs de restitution UPnP identifiés par ce module relais distant, en envoyant une requête nommée "GetLocalMediaRenderers".

A l'étape 306, à réception de la requête "GetLocalMediaRenderers", les modules relais distants DMCP_B et DMCP_J de Bob et de John interrogent leur module de contrôle d'accès respectif ACM_B ou ACM_J pour déterminer s'ils sont autorisés à répondre aux requêtes en provenance du module relais local DMCP_A d'Alice.

A l'étape 307, si l'un de ces modules relais distants dispose des autorisations nécessaires, il interroge son point de contrôle UPnP associé (DMC_B ou DMC_J) pour obtenir la liste des dispositifs de restitution UPnP du réseau local dans lequel se trouve ce point de contrôle UPnP et envoie au module relais local DMCP_A la liste ainsi obtenue. Dans cette liste, chaque dispositif de restitution est identifié par un identifiant UDN unique. A l'étape 307, si l'un des modules relais distants DMCP_B ou DMCP_J n'est pas autorisé à répondre au module relais local DMCP_A, il n'émet pas de réponse, ou bien émet une réponse avec une liste vide, ou bien émet un code d'erreur qui indique que l'opération demandée est refusée.

A l'étape 308, le module relais local DMCP_A reçoit les listes constituées par les modules relais distants (DMCP_B et/ou DMCP_J) puis met à jour la table de mappage UMT_A en enregistrant, en association avec chaque identifiant UDN reçu, les données d'adressage du module relais distant DMCP_B ou DMCP_J ayant fourni cet identifiant UDN.

A l'étape 309, le module relais local DMCP_A agrège en une liste unique les différentes listes de dispositifs de restitution UPnP reçues aux étapes 303 ou 307, puis transmet cette liste agrégée à l'application HUI_A. Cette liste agrégée représente l'ensemble des dispositifs de restitutions susceptibles d'être pilotés à partir du réseau d'Alice.

A l'étape 310, Alice choisit dans la liste agrégée un dispositif de restitution sur lequel elle souhaite effectuer la restitution du contenu C_B: on suppose ici qu'Alice choisit le dispositif de restitution DMR_A du réseau d'Alice.

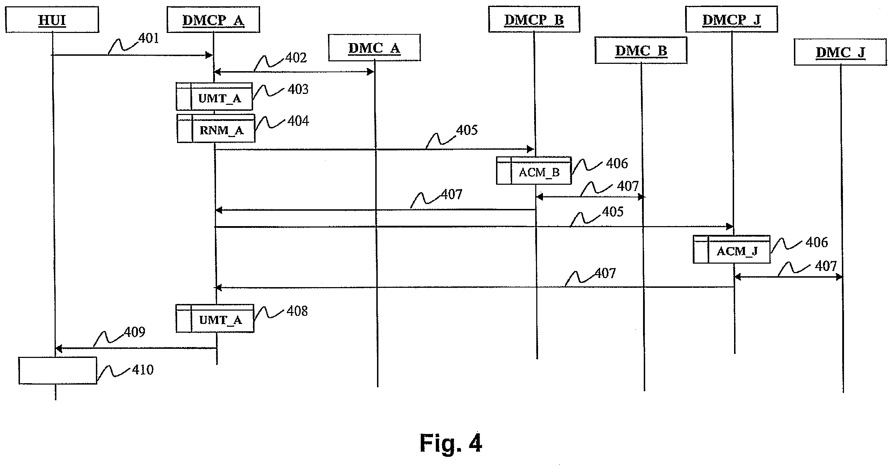

Au cours de la deuxième phase, représentée à la figure 4, Alice utilise son application HUI_A pour afficher la liste des serveurs de contenus UPnP appartenant au réseau d'Alice, de Bob ou de John, et susceptibles d'être pilotés à partir du réseau d'Alice, puis pour choisir parmi ces serveurs un serveur de contenus UPnP stockant le contenu C_B à restituer. Cette deuxième phase se déroule de la même manière que la première phase, sauf en ce qu'elle concerne l'identification de serveurs de contenus UPnP et non pas de dispositifs de restitution UPnP.

Lors de cette phase, le module relais DMCP_A obtient le ou les identifiants des serveurs de contenus UPnP des réseaux distants RS_B et/ou RS_J par l'intermédiaire du module relais DMCP_B et/ou DMCP_J de ce ou ces réseaux et du point de contrôle qui lui est associé.

A l'étape 401, l'application HUI_A envoie une requête nommée "GetAllMediaServers" au module relais local DMCP _A, afin d'obtenir la liste des serveurs de contenus UPnP appartenant au réseau d'Alice, de Bob ou de John, et susceptibles d'être pilotés à partir du réseau d'Alice.

A l'étape 402, à réception d'une telle requête, le module relais local DMCP_A interroge le point de contrôle DMC_A qui lui est associé dans le réseau local RS_A pour obtenir la liste des serveurs de contenus UPnP du réseau local RS_A d'Alice. Comme cela est connu, ces dispositifs UPnP ont été détectés dans ce réseau par le point de contrôle DMC_A par mise e, oeuvre du mécanisme de découverte de dispositifs prévu dans le standard UPnP / DLNA. Dans la liste obtenue en retour, chaque serveur de contenus est identifié par un identifiant UDN unique.

A l'étape 403, le module relais local DMCP_A met à jour la table de mappage UMT_A en enregistrant, en association avec chaque identifiant UDN reçu à l'étape 402, des données d'adressage identifiant le module relais ayant fourni cet identifiant UDN. En l'occurrence, du fait que la liste a été obtenue par le module relais local DMCP_A lui-même par interrogation du point de contrôle UPnP DMC_A qui lui est associé, une donnée d'adressage par défaut (par exemple de valeur nulle) est enregistrée en association avec chacun des identifiants UDN reçus, afin de signifier qu'il s'agit d'un serveur de contenu UPnP du réseau local, pilotable à travers le réseau local au moyen du point de contrôle UPnP DMC_A associé au module relais DMCP_A de ce réseau.

A l'étape 404, le module relais local DMCP_A interroge le module de gestion des réseaux distants RNM_A pour obtenir des données d'adressages des modules relais distants, présents dans les réseaux distants des contacts d'Alice: en l'occurrence, ces modules relais distants sont les modules relais DMCP_B et DMCP_J des réseaux de Bob et John.

A l'étape 405, le module relais local DMCP_A interroge ensuite chaque module relais distant en utilisant les données d'adressage obtenues pour ce module, pour obtenir la liste des serveurs de contenus UPnP identifiés par ce module relais distant, en envoyant une requête nommée "GetLocalMediaServers".

A l'étape 406, à réception de la requête "GetLocalMediaServers", les modules relais distants DMCP_B et DMCP_J de Bob et de John interrogent leur module de contrôle d'accès respectif ACM_B ou ACM_J pour déterminer s'ils sont autorisés à répondre aux requêtes en provenance du module relais local DMCP_A d'Alice.

A l'étape 407, si l'un de ces modules relais distants dispose des autorisations nécessaires, il interroge son point de contrôle UPnP associé (DMC_B ou DMC_J) pour obtenir la liste des serveurs de contenus UPnP du réseau local dans lequel se trouve ce point de contrôle UPnP et envoie au module relais local DMCP_A la liste ainsi obtenue. Dans cette liste, chaque serveur de contenus est identifié par un identifiant UDN unique. A l'étape 407, si l'un des modules relais distants DMCP_B ou DMCP_J n'est pas autorisé à répondre au module relais local DMCP_A, il n'émet pas de réponse ou émet une réponse avec une liste vide, ou bien émet un code d'erreur qui indique que l'opération demandée est refusée.

A l'étape 408, le module relais local DMCP_A reçoit les listes constituées par les modules relais distants (DMCP_B et/ou DMCP_J) puis met à jour la table de mappage UMT_A en enregistrant, en association avec chaque identifiant UDN reçu, les données d'adressage du module relais distant DMCP_B ou DMCP_J ayant fourni cet identifiant UDN.

A l'étape 409, le module relais local DMCP_A agrège en une liste unique les différentes listes de serveurs de contenus UPnP reçues aux étapes 403 et 407, puis transmet cette liste agrégée à l'application HUI_A. Cette liste agrégée représente l'ensemble des serveurs de contenus qu'Alice est susceptible de piloter au moyen de son application HUI_A.

A l'étape 410, Alice choisit dans la liste agrégée un serveur de contenus stockant le contenu C_B à restituer: on suppose ici qu'Alice choisit le serveur de contenus DMS_B du réseau de Bob.

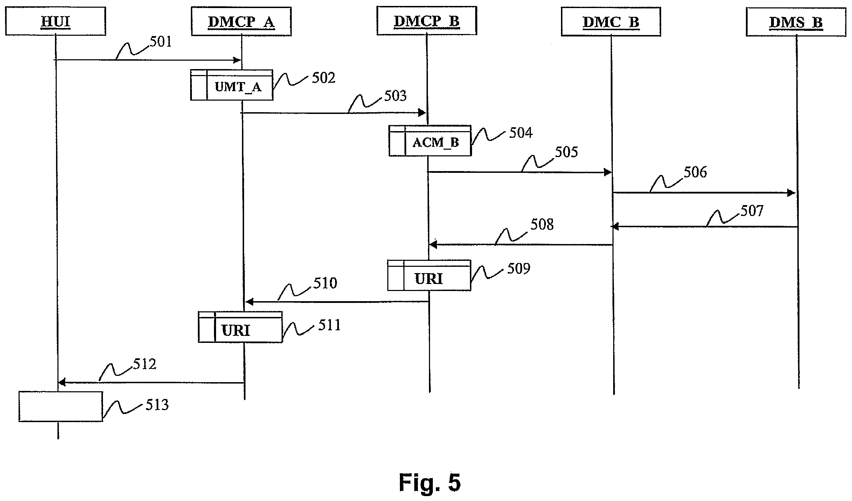

Au cours de la troisième phase, représentée à la figure 5, Alice consulte la liste des contenus du serveur de contenus DMS_B pour y sélectionner le contenu C_B à restituer.

Lors de cette phase, le module relais DMCP_A pilote le serveur de contenus DMS_B du réseau distant RS_B par l'intermédiaire du module relais DMCP_B ayant fourni l'identifiant de ce serveur de contenus UPnP et du point de contrôle associé à ce module relais.

A l'étape 501, l'application HUI_A envoie au module relais local DMCP_A une requête d'interrogation du serveur de contenu DMS_B afin d'obtenir la liste des contenus stockés sur ce serveur de contenus. Cette requête contient l'identifiant UDN propre au serveur de contenus DMS_B concerné, identifiant qui est noté UDN_DMS_B.

A l'étape 502, le module relais local DMCP_A obtient, par lecture dans la table de mappage UMT_A, les données d'adressage mémorisées à l'étape 408 en association avec l'identifiant UDN_DMS_B: ces données d'adressages sont en l'occurrence des données d'adressage du module relais distant DMCP_B du réseau de Bob. Ceci signifie que le serveur de contenus DMS_B concerné fait partie du réseau distant RS_B dans lequel se trouve ce module relais distant DMCP_B. Le module relais local DMCP_A traduit donc la requête de l'application HUI_A en une requête propre à être envoyée au module relais distant DMCP_B, cette requête comprenant l'identifiant UDN_DMS_B et étant destinée à provoquer l'envoi par le module relais distant DMCP_B d'une requête d'interrogation du serveur de contenus DMS_B, via le DMC associé au module relais.

A l'étape 503, le module relais local DMCP_A transmet la requête ainsi constituée au module relais distant DMCP_B.

A l'étape 504, à réception de cette requête, le module relais distant DMCP_B interrogent son module de contrôle d'accès ACM_B pour déterminer s'il est autorisé à répondre à cette requête, en provenance du module relais local DMCP_A d'Alice.

A l'étape 505, si le module relais distant DMCP_B dispose des autorisations nécessaires, il envoie une commande au point de contrôle DMC_B qui lui est associé, comprenant l'identifiant UDN_DMS_B, pour que le point de contrôle DMC_B interroge le serveur de contenus DMS_B afin d'obtenir la liste des contenus stockés par ce serveur. Dans la négative, aucune commande n'est envoyée.

A l'étape 506, le point de contrôle DMC_B émet une requête UPnP nommée "Browse" au serveur de contenus DMS_B.

A l'étape 507, le point de contrôle DMC_B reçoit la réponse à la requête "Browse" du serveur de contenus DMS_B. Cette réponse comprend une liste de contenus, leurs métadonnées et adresses URI respectives.

A l'étape 508, le module relais distant DMCP_B reçoit du point de contrôle DMC_B, les informations contenues dans la réponse à la requête "Browse" du serveur de contenus DMS_B, notamment la liste de contenus, les métadonnées et adresses URI.

A l'étape 509, le module relais distant DMCP_B modifie les adresses URI de tous les contenus de cette liste, en appliquant la fonction de conversion dite "conversion source". On note ORIG_URI_C_B l'adresse URI originale du contenu C_B, telle que fournie par le serveur de contenus DMS_B, et SOURCE_URI_C_B l'adresse URI générée par le module relais distant DMCP_B par application de la fonction "conversion source" à l'adresse URI originale ORIG_URI_C_B. L'adresse SOURCE_URI_C_B désigne le module d'interconnexion d'entrée ICG_B comme entité auprès de laquelle le contenu C_B est susceptible d'être obtenu.

A l'étape 510, le module relais distant DMCP_B transmet au module relais local DMCP_A la liste des contenus, comprenant, en tant qu'adresse URI, les adresses obtenues après application de la fonction "conversion source".

A l'étape 511, le module relais local DMCP_A reçoit la réponse du module relais distant DMCP_B et modifie les adresses URI de tous les contenus de cette liste, en appliquant la fonction de conversion dite "conversion destination". On note DEST_URI_C_B l'adresse URI générée par le module relais local DMCP_A par application de la fonction "conversion destination" à l'adresse URI SOURCE_URI_C_B. L'adresse DEST_URI_C_B désigne le module d'interconnexion de sortie OCG_A comme entité auprès de laquelle le contenu C_B est susceptible d'être obtenu.

A l'étape 512, le module relais local DMCP_A transmet à l'application HUI_A la liste des contenus, comprenant, en tant qu'adresse URI, les adresses obtenues après application de la fonction "conversion destination".

A l'étape 513, l'application HUI_A présente à Alice la liste des contenus reçue et Alice y choisit le contenu C_B à restituer sur le dispositif de restitution DMR_A.

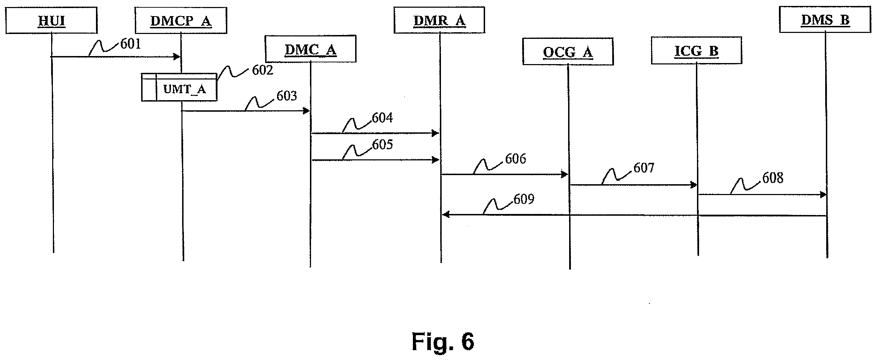

Au cours de la quatrième phase, représentée à la figure 6, Alice procède à la restitution du contenu C_B sur son dispositif de restitution DMR_A.

A l'étape 601, l'application HUI_A envoie au module relais local DMCP_A une requête de restitution pour déclencher la restitution du contenu C_B sur le dispositif de restitution DMR_A, cette requête comprenant l'adresse URI DEST_URI_C_B du contenu C_B et l'identifiant UDN propre au dispositif de restitution DMR_A concerné, identifiant qui est noté UDN_DMR_A.

A l'étape 602, le module relais local DMCP_A obtient, par lecture dans la table de mappage UMT_A, les données d'adressage mémorisées en association avec l'identifiant UDN_DMR_A: ces données d'adressages sont en l'occurrence des données d'adressage (par exemple de valeur nulle) identifiant un module local, c'est-à-dire le module relais local DMCP_A du réseau d'Alice. Ceci signifie que le dispositif de restitution DMR_A concerné fait partie du réseau local RS_A dans lequel se trouve ce module relais local DMCP_A. Le module relais local DMCP_A traduit donc la requête de l'application HUI_A en commande du point de contrôle DMC_A qui lui est associé. Cette commande comprend l'adresse URI DEST_URI_C_B du contenu C_B et l'identifiant UDN_DMR_A et vise à déclencher l'envoi au dispositif de restitution identifié par cet identifiant - c'est-à-dire au dispositif de restitution DMR_A - d'une requête pour déclencher la restitution du contenu C_B.

A l'étape 603, le module relais local DMCP_A transmet la commande ainsi constituée au point de contrôle DMC_A.

A l'étape 604, le point de contrôle DMC_A envoie au dispositif de restitution DMR_A une requête UPnP nommée "SetAVTransportURI", comprenant l'adresse URI DEST_URI_C_B, cette requête étant utilisée pour identifier le contenu à restituer.

A l'étape 605, le point de contrôle DMC_A envoie ensuite une requête UPnP nommée "Play" au dispositif de restitution DMR_A, cette requête étant utilisée pour déclencher la restitution du contenu précédemment identifié par la requête "SetAVTransportURI".

A l'étape 606, le dispositif de restitution DMR_A émet une requête HTTP de type "GET" pour obtenir les données du contenu C_B identifié par la requête "SetAVTransportURI", cette requête comprenant l'adresse URI DEST_URI_C_B. Compte-tenu de sa composition, cette adresse URI identifiant le module d'interconnexion de sortie OCG_A comme entité auprès de laquelle le contenu est susceptible d'être obtenu, cette requête est routée vers ce module d'interconnexion de sortie OCG_A.

A l'étape 607, à réception de cette requête, le module d'interconnexion CG_A extrait l'adresse SOURCE_URI_C_B de l'adresse DEST_URI_C_B, puis substitue dans la requête HTTP reçue l'adresse DEST_URI_C_B par l'adresse SOURCE_URI_C_B avant de retransmettre cette requête. Compte-tenu de sa composition, cette adresse URI SOURCE_URI_C_B identifiant le module d'interconnexion d'entrée ICG_B comme entité auprès de laquelle le contenu est susceptible d'être obtenu, cette requête est redirigée vers ce module d'interconnexion d'entrée ICG_B.

A l'étape 608, à réception de cette requête, le module d'interconnexion d'entrée ICG_B extrait l'adresse ORIG_URI_C_B de l'adresse SOURCE_URI_C_B, puis substitue dans la requête HTTP reçue l'adresse SOURCE_URI_C_B par l'adresse ORIG_URI_C_B avant de retransmettre cette requête. Compte-tenu de sa composition, cette adresse URI ORIG_URI_C_B identifiant le serveur de contenu DMS_B comme entité auprès de laquelle le contenu est susceptible d'être obtenu, cette requête est redirigée vers ce serveur de contenu DMS_B.

A l'étape 609, à réception de cette requête, le serveur de contenu DMS_B répond à la requête HTTP "GET" en transmettant les données du contenu, cette réponse étant transmise à l'émetteur de la requête HTTP, c'est-à-dire au dispositif de restitution DMR_A. Ce dernier est alors en mesure de restituer le contenu C_B.

### Deuxième scénario

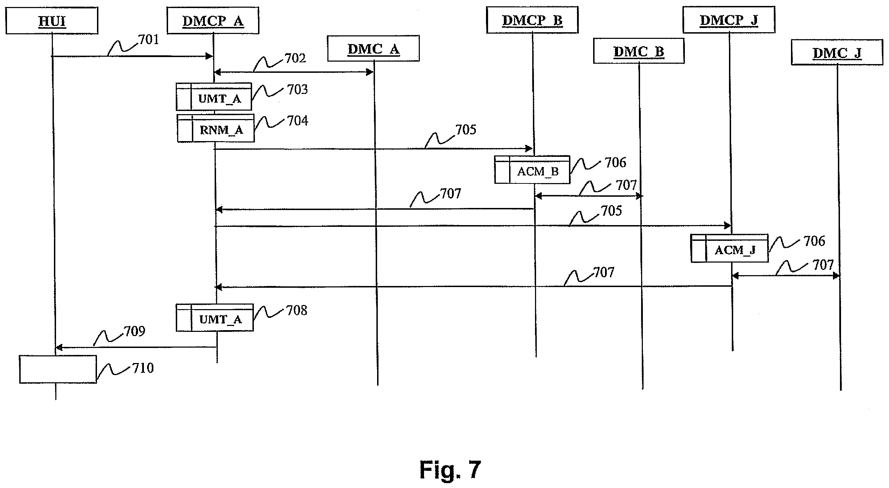

Un deuxième exemple d'application de l'invention est décrit plus en détail au regard des figures 7 à 10 à travers un scénario au cours duquel Alice demande, au moyen de son application HUI_A, à ce qu'un contenu C_A stocké sur un serveur de contenus localisé dans le réseau d'Alice soit restitué sur un dispositif de restitution UPnP DMR_B du réseau de Bob.

Dans ce contexte, le réseau RS_A d'Alice est nommé réseau local et les autres réseaux RS_B et RS_J réseaux distants. Il en est de même pour les entités (locales ou distantes) appartenant à ces réseaux.

Ce deuxième scénario comprend quatre phases successives.

Au cours de la première phase, représentée à la figure 7, Alice utilise son application HUI_A pour afficher la liste des dispositifs de restitution UPnP appartenant au réseau d'Alice, de Bob ou de John et susceptibles d'être pilotés à partir du réseau d'Alice, puis pour choisir parmi ces dispositifs le dispositif de restitution UPnP sur lequel elle veut effectuer la restitution du contenu C_A.

Lors de cette phase, le module relais DMCP_A obtient le ou les identifiants des dispositifs de restitution UPnP des réseaux distants RS_B et/ou RS_J par l'intermédiaire du module relais DMCP_B et/ou DMCP_J de ce ou ces réseaux et du point de contrôle qui lui est associé.

Les étapes 701 à 709 de cette première phase sont identiques aux étapes 301 à 309 respectivement. Elles aboutissent à la fourniture, par le module relais local DMCP_A, à l'application HUI_A, d'une liste agrégée représentant l'ensemble des dispositifs de restitutions susceptibles d'être pilotés à partir du réseau d'Alice, au moyen notamment de l'application HUI_A.

A l'étape 710, Alice choisit dans la liste agrégée un dispositif de restitution sur lequel elle souhaite effectuer la restitution du contenu C_A: on suppose ici qu'Alice choisit le dispositif de restitution DMR_B du réseau de Bob.

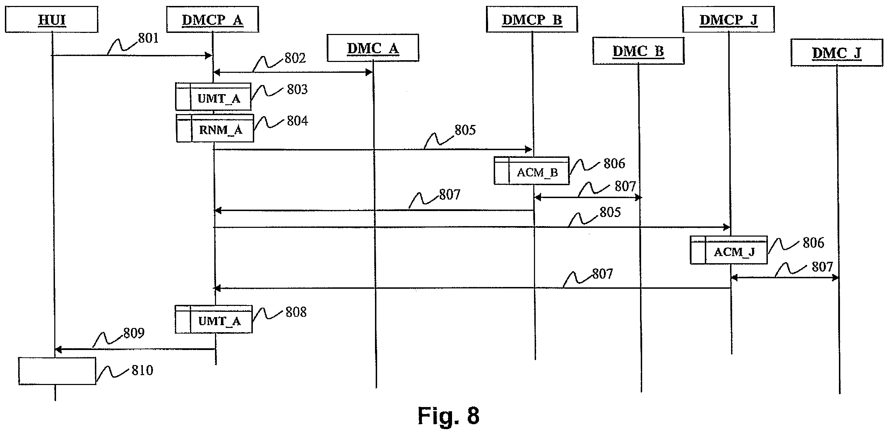

Au cours de la deuxième phase, représentée à la figure 8, Alice utilise son application HUI_A pour afficher la liste des serveurs de contenus UPnP appartenant au réseau d'Alice, de Bob ou de John et susceptibles d'être pilotés à partir du réseau d'Alice, puis pour choisir parmi ces serveurs un serveur de contenus UPnP stockant le contenu C_A à restituer.

Lors de cette phase, le module relais DMCP_A obtient le ou les identifiants des serveurs de contenus UPnP des réseaux distants RS_B et/ou RS_J par l'intermédiaire du module relais DMCP_B et/ou DMCP_J de ce ou ces réseaux et du point de contrôle qui lui est associé.

Les étapes 801 à 809 de cette deuxième phase sont identiques aux étapes 401 à 409 respectivement. Elles aboutissent à la fourniture, par le module relais local DMCP_A, à l'application HUI_A, d'une liste agrégée représentant l'ensemble des serveurs de contenus susceptibles d'être pilotés à partir du réseau d'Alice, au moyen notamment de l'application HUI_A.

A l'étape 810, Alice choisit dans la liste agrégée un serveur de contenus stockant le contenu C_A à restituer: on suppose ici qu'Alice choisit le serveur de contenus DMS_A du réseau d'Alice.

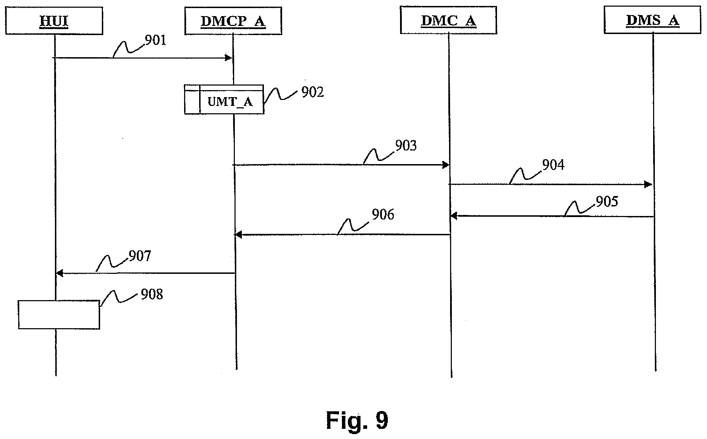

Au cours de la troisième phase, représentée à la figure 9, Alice consulte la liste des contenus du serveur de contenus DMS_A pour y sélectionner le contenu C_A à restituer.

A l'étape 901, l'application HUI_A envoie au module relais local DMCP_A une requête d'interrogation du serveur de contenu DMS_A afin d'obtenir la liste des contenus stockés sur ce serveur de contenus. Cette requête contient l'identifiant UDN propre au serveur de contenus DMS_A concerné, identifiant qui est noté UDN_DMS_A.

A l'étape 902, le module relais local DMCP_A obtient, par lecture dans la table de mappage UMT_A, les données d'adressage mémorisées en association avec l'identifiant UDN_DMS_A: ces données d'adressages sont en l'occurrence des données d'adressage (par exemple de valeur nulle) identifiant un module local, c'est-à-dire le module relais local DMCP_A du réseau d'Alice. Ceci signifie que le serveur de contenus DMS_A concerné fait partie du réseau local RS_A dans lequel se trouve ce module relais local DMCP_A. Le module relais local DMCP_A traduit donc la requête de l'application HUI_A en commande du point de contrôle DMC_A qui lui est associé, cette commande comprenant l'identifiant UDN_DMS_A et visant à déclencher l'envoi au serveur de contenus identifié par cet identifiant - c'est-à-dire au serveur de contenus DMS_A - d'une requête d'interrogation de ce serveur.

A l'étape 903, le module relais local DMCP_A transmet la commande ainsi constituée au point de contrôle DMC_A.

A l'étape 904, le point de contrôle DMC_A envoie au serveur de contenus DMS_A une requête UPnP nommée "Browse", afin d'obtenir la liste des contenus stockés par ce serveur.

A l'étape 905, le point de contrôle DMC_A reçoit la réponse à la requête UPnP "Browse". Cette réponse comprend une liste de contenus, leurs métadonnées et adresses URI respectives.

A l'étape 906, le module relais local DMCP_A reçoit du point de contrôle DMC_A les informations contenues dans la réponse à la requête "Browse" du serveur de contenus DMS_A: liste des contenus, métadonnées et adresses URI.

A l'étape 907, le module relais local DMCP_A transmet la liste des contenus reçue à l'application HUI_A. Aucune conversion des adresses URI des contenus n'est effectuée dans ce cas par le module relais local DMCP_A puisque les contenus sont stockés dans le réseau local.

A l'étape 908, l'application HUI_A présente à Alice la liste des contenus reçue et Alice y choisit le contenu C_A à restituer sur le dispositif de restitution DMR_B.

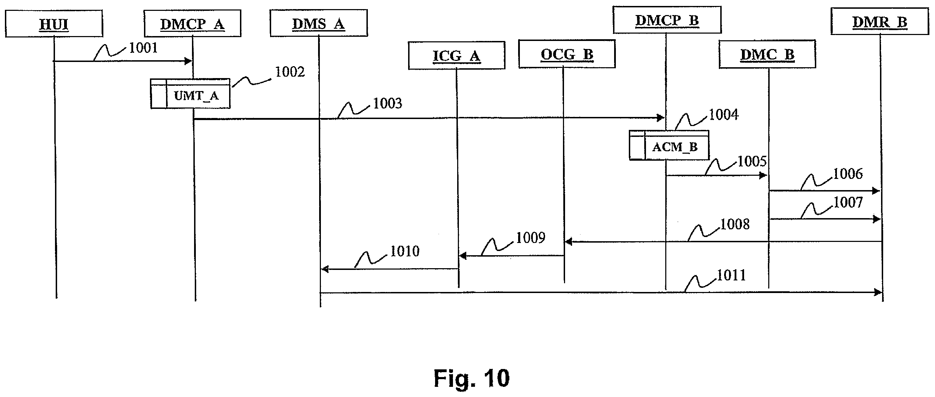

Au cours de la quatrième phase, représentée à la figure 10, Alice décide de déclencher la lecture du contenu C_A sur le dispositif de restitution DMR_B de Bob.

Lors de cette phase, le module relais DMCP_A pilote le dispositif de restitution DMR_B du réseau distant RS_B par l'intermédiaire du module relais DMCP_B ayant fourni l'identifiant de ce dispositif de restitution UPnP et du point de contrôle qui lui est associé.

A l'étape 1001, l'application HUI_A envoie au module relais local DMCP_A une requête de restitution pour déclencher la restitution du contenu C_A sur le dispositif de restitution DMR_B, cette requête comprenant l'adresse URI ORIG_URI_C_A du contenu C_A et l'identifiant UDN propre au dispositif de restitution DMR_B concerné, identifiant qui est noté UDN_DMR_B.

A l'étape 1002, le module relais local DMCP_A obtient, par lecture dans la table de mappage UMT_A, les données d'adressage mémorisées en association avec l'identifiant UDN_DMR_B: ces données d'adressages sont en l'occurrence des données d'adressage du module relais distant DMCP_B du réseau de Bob. Ceci signifie que le dispositif de restitution DMR_B concerné fait partie du réseau distant RS_B dans lequel se trouve ce module relais distant DMCP_B. Le module relais local DMCP_A traduit donc la requête de l'application HUI_A en une requête propre à être envoyée au module relais distant DMCP_B. Cette requête comprend l'identifiant UDN_DMR_B et l'adresse URI SOURCE_URI_C_A du contenu C_A, obtenue à partir de l'adresse URI ORIG_URI_C_A par application de la fonction de conversion dite "conversion source". Cette requête est destinée à provoquer l'envoi par le module relais distant DMCP_B d'une requête de restitution à destination du dispositif de restitution DMR_B. L'adresse SOURCE_URI_C_A désigne le module d'interconnexion d'entrée ICG_A comme entité auprès de laquelle le contenu C_A est susceptible d'être obtenu.

A l'étape 1003, le module relais local DMCP_A transmet la requête ainsi constituée au module relais distant DMCP_B.

A l'étape 1004, à réception de cette requête, le module relais distant DMCP_B interroge son module de contrôle d'accès ACM_B pour déterminer s'il est autorisé à répondre à cette requête, en provenance du module relais local DMCP_A d'Alice.

A l'étape 1005, si le module relais distant DMCP_B dispose des autorisations nécessaires, il génère une commande comprenant l'identifiant UDN_DMR_B du dispositif de restitution DMR_B et l'adresse URI DEST_URI_C_A du contenu C_A obtenue à partir de l'adresse URI SOURCE_URI_C_A par application de la fonction de conversion dite "conversion destination". L'adresse DEST_URI_C_A désigne le module d'interconnexion de sortie OCG_B comme entité auprès de laquelle le contenu C_A est susceptible d'être obtenu. Le module relais distant DMCP_B envoie cette commande au point de contrôle DMC_B qui lui est associé, afin de déclencher la restitution de ce contenu sur ce dispositif de restitution. Si le module relais distant DMCP_B ne dispose pas des autorisations nécessaires, aucune commande n'est envoyée.

A l'étape 1006, le point de contrôle DMC_B envoie au dispositif de restitution DMR_B une requête UPnP nommée "SetAVTransportURI", comprenant l'adresse URI DEST_URI_C_A, cette requête étant utilisée pour identifier le contenu à restituer.

A l'étape 1007, le point de contrôle DMC_B envoie ensuite au dispositif de restitution DMR_B une requête UPnP nommée "Play", cette requête étant utilisée pour déclencher la restitution du contenu précédemment identifié par la requête "SetAVTransportURI".

A l'étape 1008, le dispositif de restitution DMR_B émet une requête HTTP de type "GET" pour obtenir les données du contenu C_A identifié par la requête "SetAVTransportURI", cette requête comprenant l'adresse URI DEST_URI_C_A. Compte-tenu de sa composition, cette adresse URI identifiant le module d'interconnexion de sortie OCG_B comme entité auprès de laquelle le contenu est susceptible d'être obtenu, cette requête est routée vers le module d'interconnexion de sortie OCG_B.

A l'étape 1009, à réception de cette requête, le module d'interconnexion de sortie OCG_B extrait l'adresse SOURCE_URI_C_A de l'adresse DEST_URI_C_A, puis substitue dans la requête HTTP reçue l'adresse DEST_URI_C_A par l'adresse SOURCE_URI_C_A avant de retransmettre cette requête. Compte-tenu de sa composition, cette adresse URI SOURCE_URI_C_A identifiant le module d'interconnexion d'entrée ICG_A comme entité auprès de laquelle le contenu est susceptible d'être obtenu, cette requête est redirigée vers le module d'interconnexion d'entrée ICG_A.

A l'étape 1010, à réception de cette requête, le module d'interconnexion d'entrée ICG_A extrait l'adresse ORIG_URI_C_A de l'adresse SOURCE_URI_C_A, puis substitue dans la requête HTTP reçue l'adresse SOURCE_URI_C_A par l'adresse ORIG_URI_C_A avant de retransmettre cette requête. Compte-tenu de sa composition, cette adresse URI ORIG_URI_C_A identifiant le serveur de contenu DMS_A comme entité auprès de laquelle le contenu est susceptible d'être obtenu, cette requête est redirigée vers ce serveur de contenu DMS_A.

A l'étape 1011, à réception de cette requête, le serveur de contenu DMS_A répond à la requête HTTP GET en transmettant les données du contenu, cette réponse étant transmise à l'émetteur de la requête HTTP, c'est-à-dire au dispositif de restitution DMR_B. Ce dernier est alors en mesure de restituer le contenu C_A.

### Autres scénarios

L'invention est applicable à tout autre scénario nécessitant le pilotage d'une entité UPnP d'un réseau distant à partir d'un réseau local: restitution d'un contenu d'un restant distant sur un dispositif de restitution d'un autre réseau distant ou du même réseau distant, consultation des contenus de serveurs localisés dans différents réseaux distants, etc.

## Revendications

1. Procédé de pilotage, à partir d'un premier réseau (RS_A), dit réseau local, d'au moins un dispositif UPnP / DLNA d'un réseau distant (RS_B, RS_J), le procédé étant mis en oeuvre par un premier module (DMCP_A) relais du premier réseau, configuré pour communiquer avec au moins un deuxième module (DMCP_B, DMCP_J) relais d'un réseau distant, le procédé comprenant:
- une étape d'obtention, via un dit deuxième module relais, d'au moins un identifiant d'un dispositif UPnP / DLNA (DMS_B, DMR_B, DMS_J, DMR_J) détecté dans un dit réseau distant par un point de contrôle UPnP / DLNA associé audit deuxième module relais ;
- une étape d'enregistrement d'au moins un identifiant reçu en association avec des données d'identification du deuxième module relais ayant fourni ledit au moins un identifiant;
- une étape de pilotage d'un dispositif UPnP / DLNA dudit réseau distant par l'intermédiaire du point de contrôle associé au deuxième module relais, identifié par les données d'identification enregistrées en association avec un identifiant de ce dispositif UPnP / DLNA.

2. Procédé selon la revendication 1, comprenant
- une étape d'envoi d'une requête à un deuxième dispositif UPnP / DLNA du réseau distant par l'intermédiaire du deuxième module relais identifié par les données d'identification enregistrées en association avec un identifiant dudit dispositif UPnP / DLNA;
- une étape de réception, par l'intermédiaire dudit deuxième module relais, d'une réponse à ladite requête en provenance du deuxième dispositif UPnP / DLNA.

3. Procédé selon la revendication 1, comprenant
- une étape de réception, par l'intermédiaire du deuxième module relais, d'une requête destinée à un dispositif UPnP / DLNA du réseau local (RS_A),
- une étape de transmission de ladite requête au dispositif UPnP / DLNA concerné;
- une étape de transmission, audit deuxième module relais, d'une réponse à ladite requête construite à partir de la réponse fournie par le dispositif UPnP / DLNA concerné.

4. Procédé selon la revendication 3, comprenant une étape d'enregistrement pour au moins un dit deuxième module relais de données représentant une autorisation ou interdiction de répondre à une requête provenant de ce deuxième module relais.

5. Procédé selon la revendication 2 ou 3, comprenant, lorsqu'une requête ou réponse à requête, destinée à être transmise par le premier module relais à un dit deuxième module relais, comprend une adresse d'un contenu référencé par un serveur de contenu du réseau local (RS_A), une étape de conversion de cette adresse en une adresse convertie désignant un module d'interconnexion (ICG_A) d'une passerelle d'accès au réseau local (RS_A) comme l'entité auprès de laquelle ce contenu est susceptible d'être obtenu.

6. Procédé selon la revendication 2 ou 3, comprenant, lorsqu'une requête ou réponse à requête, reçue par le premier module relais et provenant d'un dit deuxième module relais, comprend une adresse d'un contenu référencé par un serveur de contenu du réseau (RS_B, RS_J) distant, une étape de conversion de cette adresse en une adresse convertie désignant un module d'interconnexion (OCG_A) d'une passerelle d'accès au réseau local (RS_A) comme l'entité auprès de laquelle ce contenu est susceptible d'être obtenu.

7. Procédé selon la revendication 1, comprenant
- une étape d'interrogation d'un point de contrôle UPnP / DLNA du réseau (RS_A) local pour obtenir au moins une identification d'un premier dispositif UPnP / DLNA détecté par ce point de contrôle UPnP / DLNA dans le premier réseau;
- une étape d'enregistrement de l'identification reçue en association avec des données d'identification identifiant le premier module relais comme entité via laquelle le premier dispositif UPnP / DLNA est susceptible d'être piloté.

8. Procédé selon la revendication 7, comprenant une étape de constitution d'une liste d'au moins un dispositif UPnP / DLNA susceptible d'être piloté à partir du premier module (DMCP_A) relais, comprenant le ou les identifiants reçus d'un dit deuxième module (DMCP_B, DMCP_J) relais ou d'un point de contrôle UPnP / DLNA du réseau local (RS_A).

9. Procédé selon la revendication 1, comprenant une étape de pilotage d'un dispositif UPnP / DLNA du réseau local (RS_A) par l'intermédiaire d'un point de contrôle UPnP / DLNA du réseau local (RS_A).

10. Procédé selon la revendication 1, comprenant une étape d'enregistrement de données d'identification d'au moins un dit deuxième module (DMCP_B, DMCP_J) relais d'un réseau distant (RS_B, RS_J) en association avec un identifiant d'un contact, utilisateur de ce réseau distant (RS_B, RS_J).

11. Module (DMCP_A) relais d'un premier réseau (RS_A) configuré pour communiquer avec au moins un deuxième module (DMCP_B, DMCP_J) relais d'un réseau distant (RS_B, RS_J) et comprenant:
- des moyens d'obtention, via un dit deuxième module relais, d'au moins un identifiant d'un dispositif UPnP / DLNA (DMS_B, DMR_B, DMS_J, DMR_J) détecté dans un dit réseau distant par un point de contrôle UPnP / DLNA associé audit deuxième module relais;
- des moyens d'enregistrement d'au moins un identifiant reçu en association avec des données d'identification du deuxième module relais ayant fourni ledit au moins un identifiant;
- des moyens de pilotage d'un dispositif UPnP / DLNA dudit réseau distant par l'intermédiaire du point de contrôle associé au deuxième module relais, identifié par les données d'identification enregistrées en association avec un identifiant de ce dispositif UPnP / DLNA.

12. Module (DMCP_A) relais d'un réseau distant (RS_A) configuré pour communiquer avec un premier module relais selon la revendication 11 comprenant:
- des moyens pour fournir audit premier module relais au moins un identifiant d'un dispositif UPnP / DLNA (DMS_B, DMR_B, DMS_J, DMR_J) détecté dans le réseau distant par un point de contrôle UPnP associé audit module relais;
- des moyens de pilotage d'un dispositif UPnP / DLNA dudit réseau distant sur requête provenant du premier module relais.

13. Point de contrôle UPnP / DLNA d'un premier réseau associé à un premier module relais selon la revendication 12 comprenant:
- des moyens pour fournir au premier module relais au moins un identifiant d'un dispositif UPnP / DLNA (DMS_B, DMR_B, DMS_J, DMR_J) détecté par ledit point de contrôle UPnP / DLNA;
- des moyens de pilotage d'un dispositif UPnP / DLNA du premier réseau configurés pour, sur requête du premier module relais, transmettre à un dit dispositif UPnP / DLNA une requête UPnP / DLNA.

## Patentansprüche

1. Verfahren zum Steuern, ausgehend von einem ersten Netzwerk (RS_A), lokales Netzwerk genannt, mindestens einer UPnP/DLNA-Vorrichtung eines entfernten Netzwerks (RS_B, RS_J), wobei das Verfahren von einem ersten Relais-Modul (DMCP_A) des ersten Netzwerks durchgeführt wird, das konfiguriert ist, mit mindestens einem zweiten Relais-Modul (DMCP_B, DMCP_J) eines entfernten Netzwerks zu kommunizieren, wobei das Verfahren enthält:
- einen Schritt des Erhalts, über ein zweites Relais-Modul, mindestens einer Kennung einer UPnP/DLNA-Vorrichtung (DMS_B, DMR_B, DMS_J, DMR_J), die in einem entfernten Netzwerk von einem dem zweiten Relais-Modul zugeordneten UPnP/DLNA-Kontrollpunkt erfasst wird;
- einen Schritt des Speicherns mindestens einer empfangenen Kennung zusammen mit Identifikationsdaten des zweiten Relais-Moduls, das die mindestens eine Kennung geliefert hat;
- einen Schritt des Steuerns einer UPnP/DLNA-Vorrichtung des entfernten Netzwerks mittels des dem durch die gespeicherten Identifikationsdaten zusammen mit einer Kennung dieser UPnP/DLNA-Vorrichtung identifizierten zweiten Relais-Modul zugeordneten Kontrollpunkts.

2. Verfahren nach Anspruch 1, das enthält
- einen Schritt des Sendens einer Anforderung an eine zweite UPnP/DLNA-Vorrichtung des entfernten Netzwerks mittels des von den gespeicherten Identifikationsdaten zusammen mit einer Kennung der UPnP/DLNA-Vorrichtung identifizierten zweiten Relais-Moduls;
- einen Schritt des Empfangs, mittels des zweiten Relais-Moduls, einer Antwort auf die Anforderung ausgehend von der zweiten UPnP/DLNA-Vorrichtung.

3. Verfahren nach Anspruch 1, das enthält
- einen Schritt des Empfangs, mittels des zweiten Relais-Moduls, einer für eine UPnP/DLNA-Vorrichtung des lokalen Netzwerks (RS_A) bestimmten Anforderung,
- einen Schritt der Übertragung der Anforderung an die betroffene UPnP/DLNA-Vorrichtung;
- einen Schritt der Übertragung, an das zweite Relais-Modul, einer Antwort auf die Anforderung, erstellt ausgehend von der von der betroffenen UPnP/DLNA-Vorrichtung gelieferten Antwort.

4. Verfahren nach Anspruch 3, das einen Schritt des Speicherns für mindestens ein zweites Relais-Modul von Daten, die eine Genehmigung oder ein Verbot des Antwortens auf eine von diesem zweiten Relais-Modul kommende Anforderung darstellen.

5. Verfahren nach Anspruch 2 oder 3, das, wenn eine Anforderung oder eine Antwort auf eine Anforderung, die dazu bestimmt ist, vom ersten Relais-Modul an ein zweites Relais-Modul übertragen zu werden, eine Adresse eines von einem Inhaltsserver des lokalen Netzwerks (RS_A) referenzierten Inhalts enthält, einen Schritt der Umwandlung dieser Adresse in eine umgewandelte Adresse enthält, die ein Verbindungsmodul (ICG_A) eines Gateways für den Zugang zum lokalen Netzwerk (RS_A) als die Entität bezeichnet, bei der dieser Inhalt erhalten werden kann.

6. Verfahren nach Anspruch 2 oder 3, das, wenn eine Anforderung oder eine Antwort auf eine Anforderung, die vom ersten Relais-Modul empfangen wird und von einem zweiten Relais-Modul stammt, eine Adresse eines von einem Inhaltsserver des entfernten Netzwerks (RS_B, RS_J) referenzierten Inhalts enthält, einen Schritt der Umwandlung dieser Adresse in eine umgewandelte Adresse enthält, die ein Verbindungsmodul (OCG_A) eines Gateways für den Zugang zum lokalen Netzwerk (RS_A) als die Entität bezeichnet, bei der dieser Inhalt erhalten werden kann.

7. Verfahren nach Anspruch 1, das enthält
- einen Schritt der Abfrage eines UPnP/DLNA-Kontrollpunkts des lokalen Netzwerks (RS_A), um mindestens eine Identifikation einer ersten UPnP/DLNA-Vorrichtung zu erhalten, die von diesem UPnP/DLNA-Kontrollpunkt im ersten Netzwerk erfasst wurde;
- einen Schritt des Speicherns der empfangenen Identifikation zusammen mit Identifikationsdaten, die das Relais-Modul als Entität identifizieren, über die die erste UPnP/DLNA-Vorrichtung gesteuert werden kann.

8. Verfahren nach Anspruch 7, das einen Schritt des Erstellens einer Liste mindestens einer UPnP/DLNA-Vorrichtung enthält, die ausgehend vom ersten Relais-Modul (DMCP_A) gesteuert werden kann, die die empfangenen Kennung(en) eines zweiten Relais-Moduls (DMCP_B, DMCP_J) oder eines UPnP/DLNA-Kontrollpunkts des lokalen Netzwerks (RS_A) enthält.

9. Verfahren nach Anspruch 1, das einen Schritt des Steuerns einer UPnP/DLNA-Vorrichtung des lokalen Netzwerks (RS_A) mittels eines UPnP/DLNA-Kontrollpunkts des lokalen Netzwerks (RS_A) enthält.

10. Verfahren nach Anspruch 1, das einen Schritt des Speicherns von Identifikationsdaten mindestens eines zweiten Relais-Moduls (DMCP_B, DMCP_J) eines entfernten Netzwerks (RS_B, RS_J) zusammen mit einer Kennung eines Kontakts, der Benutzer dieses entfernten Netzwerks (RS_B, RS_J) ist, enthält.

11. Relais-Modul (DMCP_A) eines ersten Netzwerks (RS_A), das konfiguriert ist, mit mindestens einem zweiten Relais-Modul (DMCP_B, DMCP_J) eines entfernten Netzwerks (RS_B, RS_J) zu kommunizieren und enthält:
- Einrichtungen zum Erhalt, über ein zweites Relais-Modul, mindestens einer Kennung einer UPnP/DLNA-Vorrichtung (DMS_B, DMR_B, DMS_J, DMR_J), die in einem entfernten Netzwerk von einem dem zweiten Relais-Modul zugeordneten Kontrollpunkt UPnP/DLNA erfasst wurde;
- Einrichtungen zum Speichern mindestens einer empfangenen Kennung zusammen mit Identifikationsdaten des zweiten Relais-Moduls, das die mindestens eine Kennung geliefert hat;
- Einrichtungen zum Steuern einer UPnP/DLNA-Vorrichtung des entfernten Netzwerks mittels des dem zweiten Relais-Modul zugeordneten Kontrollpunkts, das von den Identifikationsdaten identifiziert wird, die zusammen mit einer Kennung dieser UPnP/DLNA-Vorrichtung gespeichert sind.

12. Relais-Modul (DMCP_A) eines entfernten Netzwerks (RS_A), das konfiguriert ist, mit einem ersten Relais-Modul nach Anspruch 11 zu kommunizieren, das enthält:
- Einrichtungen zum Liefern an das erste Relais-Modul mindestens einer Kennung einer UPnP/DLNA-Vorrichtung (DMS_B, DMR_B, DMS_J, DMR_J), die im entfernten Netzwerk von einem dem Relais-Modul zugeordneten UPnP-Kontrollpunkt erfasst wird;
- Einrichtungen zum Steuern einer UPnP/DLNA-Vorrichtung des entfernten Netzwerks nach einer vom ersten Relais-Modul kommenden Anforderung.

13. UPnP/DLNA-Kontrollpunkt eines ersten Netzwerks, der einem ersten Relais-Modul nach Anspruch 12 zugeordnet ist, das enthält:
- Einrichtungen zum Liefern an das erste Relais-Modul mindestens einer Kennung einer UPnP/DLNA-Vorrichtung (DMS_B, DMR_B, DMS_J, DMR_J), die von diesem Kontrollpunkt UPnP/DLNA erfasst wurde;
- Einrichtungen zum Steuern einer UPnP/DLNA-Vorrichtung des ersten Netzwerks, die konfiguriert sind, auf Anforderung des ersten Relais-Moduls eine UPnP/DLNA-Anforderung an eine UPnP/DLNA-Vorrichtung zu übertragen.

## Claims

1. Method for controlling, from a first network (RS_A), called a local network, at least one UPnP/DLNA device of a remote network (RS_B, RS_J), the method being applied by a first relay module (DMCP_A) of the first network, configured to communicate with at least a second relay module (DMCP_B, DMCP_J) of a remote network, the method comprising:
- a step of obtaining, via a said second relay module, at least one identifier of a UPnP/DLNA device (DMS_B, DMR_B, DMS_J, DMR_J) detected in one said remote network by a UPnP/DLNA control point associated with said second relay module;
- a step of recording at least one identifier received in association with identification data of the second relay module that has supplied said at least one identifier;
- a step of controlling a UPnP/DLNA device of said remote network by means of the control point associated with the second relay module, identified by the recorded identification data in association with an identifier of this UPnP/DLNA device.

2. Method according to Claim 1, comprising
- a step of sending a request to a second UPnP/DLNA device of the remote network by means of the second relay module identified by the recorded identification data in association with an identifier of said UPnP/DLNA device;
- a step of receiving, by means of said second relay module, a response to said request from the second UPnP/DLNA device.

3. Method according to Claim 1, comprising
- a step of receiving, by means of the second relay module, a request intended for a UPnP/DLNA device of the local network (RS_A),
- a step of transmitting said request to the UPnP/DLNA device concerned;
- a step of transmitting, to said second relay module, a response to said request constructed from the response supplied by the UPnP/DLNA device concerned.

4. Method according to Claim 3, comprising a step of recording, for at least one said second relay module, data representing an authorization to or prohibition from responding to a request originating from this second relay module.

5. Method according to Claim 2 or 3, comprising, when a request or a response to a request, designed to be transmitted by the first relay module to one said second relay module, comprises an address of a content referenced by a content server of the local network (RS_A), a step of converting this address into a converted address designating an interconnection module (ICG_A) of a gateway for access to the local network (RS_A) as the entity from which this content is capable of being obtained.

6. Method according to Claim 2 or 3, comprising, when a request or a response to a request, received by the first relay module and originating from one said second relay module, comprises an address of a content referenced by a content server of the remote network (RS_B, RS_J), a step of converting this address into a converted address designating an interconnection module (OCG_A) of a gateway for access to the local network (RS_A) as the entity from which this content is capable of being obtained.

7. Method according to Claim 1, comprising
- a step of interrogating a UPnP/DLNA control point of the local network (RS_A) in order to obtain at least one identification of a first UPnP/DLNA device detected by this UPnP/DLNA control point in the first network;
- a step of recording the received identification in association with identification data identifying the first relay module as an entity via which the first UPnP/DLNA device is capable of being controlled.

8. Method according to Claim 7, comprising a step of creating a list of at least one UPnP/DLNA device capable of being controlled from the first relay module (DMCP_A), comprising the received identifier(s) of one said second relay module (DMCP_B, DMCP_J) or of one UPnP/DLNA control point of the local network (RS_A).

9. Method according to Claim 1, comprising a step of controlling a UPnP/DLNA device of the local network (RS_A) by means of a UPnP/DLNA control point of the local network (RS_A).

10. Method according to Claim 1, comprising a step of recording identification data of at least one said second relay module (DMCP_B, DMCP_J) of a remote network (RS_B, RS_J) in association with an identifier of a contact, a user of this remote network (RS_B, RS_J).

11. Relay module (DMCP_A) of a first network (RS_A) configured to communicate with at least one second relay module (DMCP_B, DMCP_J) of a remote network (RS_B, RS_J) and comprising:
- means for obtaining, via one said second relay module, at least one identifier of a UPnP/DLNA device (DMS_B, DMR_B, DMS_J, DMR_J) detected in one said remote network by a UPnP/DLNA control point associated with said second relay module;
- means for recording at least one received identifier in association with identification data of the second relay module that has supplied said at least one identifier;
- means for controlling a UPnP/DLNA device of said remote network by means of the control point associated with the second relay module, identified by the recorded identification data in association with an identifier of this UPnP/DLNA device.

12. Relay module (DMCP_A) of a remote network (RS_A) configured to communicate with a first relay module according to Claim 11, comprising:
- means for supplying to said first relay module at least one identifier of a UPnP/DLNA device (DMS_B, DMR_B, DMS_J, DMR_J) detected in the remote network by a UPnP control point associated with said relay module;
- means for controlling a UPnP/DLNA device of said remote network on request originating from the first relay module.

13. UPnP/DLNA control point of a first network associated with a first relay module according to Claim 12, comprising:
- means for supplying to the first relay module at least one identifier of a UPnP/DLNA device (DMS_B, DMR_B, DMS_J, DMR_J) detected by said UPnP/DLNA control point;
- means for controlling a UPnP/DLNA device of the first network, said means being configured in order to, on request from the first relay module, transmit a UPnP/DLNA request to one said UPnP/DLNA device.
